Europäisches Patentamt

European Patent Office

Office européen des brevets

(19)

(11) **EP 1 358 002 B1**

(12) **FASCICULE DE BREVET EUROPEEN**

(45) Date de publication et mention
de la délivrance du brevet:
**11.10.2006 Bulletin 2006/41**

(21) Numéro de dépôt: **01994893.4**

(22) Date de dépôt: **18.12.2001**

(51) Int Cl.:
**B01D 71/02** (2006.01)     **B01D 53/22** (2006.01)
**B01D 53/32** (2006.01)     **C01B 13/02** (2006.01)

(86) Numéro de dépôt international:
**PCT/FR2001/004035**

(87) Numéro de publication internationale:
**WO 2002/058829 (01.08.2002 Gazette 2002/31)**

(54) **STRUCTURES-MICROSTRUCTURES DE MEMBRANE CERAMIQUE CONDUCTEURS PAR IONS OXYDE; UTILISATION POUR SEPARER L'OXYGENE DE L'AIR**

GESTAPELTE MIKROSTRUKTUREN LEITENDER, KERAMISCHER OXIDIONENMEMBRANEN; VERWENDUNG ZUR TRENNUNG VON SAUERSTOFF VON LUFT

OXIDE ION CONDUCTIVE CERAMIC MEMBRANE STACKED MICROSTRUCTURES; USE FOR SEPARATING OXYGEN FROM AIR

(84) Etats contractants désignés:
**AT BE CH CY DE DK ES FI FR GB GR IE IT LI LU MC NL PT SE TR**

(30) Priorité: **26.01.2001 FR 0101085**

(43) Date de publication de la demande:
**05.11.2003 Bulletin 2003/45**

(73) Titulaire: **L'air Liquide, S.A. à Directoire et Conseil de**
**Surveillance pour l'Etude et l'Exploitation des Procédés Georges Claude**
**75321 Paris Cedex 07 (FR)**

(72) Inventeurs:
• **CHAPUT, Christophe**
  **87410 Le Palais sur Vienne (FR)**
• **TERRACOL, Thierry**
  **F-87100 Limoges (FR)**
• **BACH, Gisèle**
  **F-87100 Limoges (FR)**
• **GOURIOU, Guylaine**
  **F-78280 Guyancourt (FR)**
• **DEL GALLO, Pascale**
  **1410 Dourdan (FR)**

(74) Mandataire: **Conan, Philippe Claude**
  **L'Air Liquide**
  **D.S.P.I.**
  **75, quai d'Orsay**
  **75321 Paris Cedex 07 (FR)**

(56) Documents cités:
EP-A- 0 424 691     WO-A-96/28856
WO-A-98/48923     US-A- 5 935 533

EP 1 358 002 B1

Printed by Jouve, 75001 PARIS (FR)

**Description**

L'invention se rapporte au domaine de l'électrochimie solide.

La cellule électrochimique élémentaire mise en oeuvre pour séparer l'oxygène de l'air ou d'un mélange gazeux le contenant, est constituée généralement d'un système ternaire électrolyte solide / électrodes / collecteurs de courant.

Les électrolytes solides utilisés, pour la séparation de l'oxygène de mélange gazeux, sont des oxydes céramiques dopés qui, à la température d'utilisation, se présentent sous forme d'un réseau cristallin possédant des lacunes en ions oxydes. Les structures cristallines associées peuvent être, par exemple, des phases cubique, fluorite, pérovskite, Brown - millerite, dites d'Aurivillius ; J.C. Boivin et G. Mairesse ont référencé toutes les phases cristallines conducteurs anioniques $O^{2-}$ dans un article général (Chem. Mat. ; 1998, p. 2870-2888; "Recent Material Developments in Fast Oxide Ion Conductors").

Les matériaux d'électrodes associés à l'électrolyte solide sont généralement des pérovskites. Ce sont des matériaux possédant une structure cristalline de type $ABO_3$ ou $AA'BB'O_6$ (A, A' : lanthanide et/ou actinide; B, B' : métaux de transition) fondée sur la structure de la pérovskite naturelle, $CaTiO_3$. Ces matériaux présentent de bonnes propriétés de conductivité mixte (ionique et électronique), grâce à cette structure cristalline cubique, dans laquelle les ions métalliques se trouvent aux sommets et au centre d'un cube élémentaire et les ions oxygène aux milieux des arêtes de ce cube. Les matériaux d'électrodes peuvent aussi être des mélanges matériaux pérovskites/conducteur purement ionique ou encore des mélanges à base de matériaux possédant d'autres phases cristallines, par exemple de type Aurivillius, Brown - millerite ou pyrochlore.

Le collectage de courant est assuré, <u>soit</u> par un métal ou une laque de métal, <u>soit</u> par un mélange métal / céramique "oxyde inerte" telle que l'alumine, <u>soit</u> par un mélange métal / carbure tel que le carbure de silicium ou par un mélange métal / nitrure tel que le nitrure de silicium, dans lequel le rôle principal de l'oxyde, du carbure ou du nitrure est de bloquer mécaniquement les phénomènes de ségrégation / frittage apparaissant du fait des hautes températures de fonctionnement (700 °C < T < 900 °C), notamment lorsque l'on utilise l'argent comme métal collecteur de courant, <u>soit</u> par un mélange métal / céramique oxyde "conducteur mixte" tel qu'un oxyde de structure pérovskite de la famille des manganites de lanthane dopés au strontium, <u>soit</u> par un mélange métal / céramique oxyde "conducteur ionique" tel que la zircone stabilisée à l'yttrium.

Cependant, la demanderesse a constaté que lorsque l'on fait fonctionner, à une température comprise entre 700 et 900 °C, que ce soit à pression atmosphérique, soit sous pression interne d'oxygène comprise entre 1 et $50 \times 10^5$ Pa. (1 - 50 bars), soit sous pression externe d'oxygène comprise entre 100 et $150 \times 10^5$ Pa. (100 - 150 bars), une cellule électrochimique tubulaire, dans laquelle l'électrolyte solide est de l'oxyde de zirconium stabilisé avec 8% (molaire) d'oxyde d'yttrium (YSZ 8%), les électrodes sont en $La_{0,9}Sr_{0,1}MnO_{3-\delta}$.(LSM) et les collecteurs de courant sont une laque d'argent, on observe un vieillissement accéléré de cette cellule. Ceci se traduit par une augmentation de 70% du voltage de la cellule en 40 heures de fonctionnement.

En remplaçant les collecteurs de courant en laque d'argent par des collecteurs de courant "cermet", mélanges métal / céramiques, Ag / YSZ(8%) (50 / 50, % en volume) ou Ag / LSM (50 / 50, % en volume), le vieillissement est fortement ralenti. Le phénomène de dégradation n'est cependant pas totalement supprimé car l'on constate une augmentation de 6 à 20 % du voltage total pour 100 heures de fonctionnement. Lorsque l'on travaille sous une pression interne d'oxygène comprise entre 1 et $50 \times 10^5$ Pa (1-50 bars) pour des températures comprises entre 750°C et 800 °C, on peut observer aussi une baisse du rendement faradique et une chute du potentiel.

L.S. Wang et S.A. Barnett ont décrit l'utilisation de $LaCoO_3$ pour recouvrir des cellules à base de zircone stabilisée recouvertes d'un mélange Ag/YSZ. Ces travaux ont montré qu'après 150 heures de fonctionnement à 750 °C, le système YSZ / Ag - YSZ (50 / 50) / couche $LaCoO_3$ ne perdait pas d'argent, contrairement au système sans couche "protectrice" de $LaCoO_3$, pour lequel il y avait ségrégation et perte en masse d'argent par évaporation au cours du temps. Cependant, la pérovskite $LaCoO_3$ ne présente pas de bonnes propriétés de conductivité mixte.

La demanderesse est partie de l'hypothèse que, dans le cas de collecteurs de courant à base de laque d'argent, le vieillissement ou dégradation du système (1 <P<$50 \times 10^5$ Pa) et la chute du rendement faradique sous pression (P > $20 \times 10^5$ Pa) et à température élevée (800°C), étaient les conséquences d'une mauvaise architecture de la cellule utilisée.

<u>On entend par architecture</u>, les structures et microstructures des différents matériaux constituant la membrane céramique, à savoir l'électrolyte solide (YSZ 8% mol., zircone stabilisée à l'yttrium), l'électrode (LSM : manganite de lanthane dopé au strontium) et le collecteur de courant (laque d'argent ou cermet argent/céramique oxyde ou non côté cathodique; laque d'or côté anodique).

<u>On entend par structure</u>, le système d'empilements choisi ainsi que l'ordre des différents dépôts pour élaborer une cellule électrochimique (électrolyte solide / électrode / collecteur de courant) ainsi que les formes géométriques (tube, plaque) des membranes.

<u>On entend par microstructure</u>, les épaisseurs, les compacités, les surfaces et rugosités développées au niveau des différents matériaux caractérisant la membrane, les tailles et morphologies des grains et/ou des particules des divers matériaux, les porosités inter et intra granulaires de l'électrolyte solide, la nature (morphologie) de la surface de l'électrolyte solide, les porosités et empilements de particules des différents dépôts (électrode, collecteur de courant).

Elle a supposé que l'emploi d'argent comme collecteur de courant dans certaines conditions de fonctionnement (température, pression d'oxygène, densité de courant appliquée) avait pour conséquence une ségrégation / frittage de ce métal à des températures supérieures à 750 °C, son évaporation, accentuée par le balayage sous air chaud de la cellule, à des températures supérieures à 700 °C et sa diffusion sous pression ($20 \times 10^5$ Pa) à travers l'électrolyte solide à température élevée (> 780 °C). Cette diffusion pouvait être liée non seulement aux conditions opératoires permettant la présence éventuelle d'argent sous forme quasi-liquide, mais également à l'emploi de membranes céramiques de compacité faible (inférieure à 95 %), qui possèdent une porosité inter et intra granulaire élevée ainsi qu'à une microstructure inappropriée, tant en termes de taille des grains de l'électrolyte solide, que de joints entre les grains.

Après avoir observé après fonctionnement, un décollement des dépôts électrode / collecteur de courant de la surface interne de la membrane, c'est à dire sur le côté anodique où est produit l'oxygène et un décollement des interfaces électrode / collecteur de courant dans les cellules utilisées jusqu'à présent, elle a aussi supposée que ce phénomène pouvait être en relation avec l'absence de surface spécifique et rugosité développée en surface interne ou externe de l'électolyte solide.

La demanderesse a donc cherché un moyen de limiter, voire d'arrêter, les dégradations décrites ci-dessus.

C'est pourquoi, l'invention a pour objet une membrane céramique conductrice par ions oxyde, caractérisée en ce qu'elle comprend un volume fini non nul d'épaisseur totale non nulle E, comprenant :

a) une couche dense (CD) d'un électrolyte solide ayant, à la température d'électrolyse, une structure cristalline conductrice par ions oxydes, d'épaisseur non nulle $e_0$ et de surfaces externes opposées $S_0$ et $S'_0$ identiques ou différentes,

b) une couche dite d'accrochage (CA), possédant, soit une structure cristalline conductrice par ions oxyde, soit une structure cristalline conductrice mixte, soit un mélange des deux structures cristallines précitées, plaquée sur la surface $S_0$ de la couche dense (CD), ayant une épaisseur $e_1$ non nulle, une surface externe $S_1$, une surface spécifique $S_{1\omega}$ et une rugosité $R_1$,

c) de deux électrodes poreuses (EP) et (EP'), conductrices mixtes, de compositions chimiques identiques ou différentes, plaquées, l'une sur la surface $S_1$ de (CA) et l'autre sur la surface $S'_0$ de (CD), lesdites électrodes ayant respectivement des surfaces externes $S_2$ et $S'_2$ non nulles, identiques ou différentes et des épaisseurs non nulles $e_2$, et $e'_2$, identiques ou différentes, et

d) de deux collecteurs de courant poreux (CC) et (CC'), de compositions chimiques identiques ou différentes, plaqués sur les surfaces $S_2$ et $S'_2$ de (EP) et (EP'), lesdits collecteurs de courant (CC) et (CC'), ayant respectivement des surfaces externe $S_3$ et $S_3'$ non nulles, identiques ou différentes et des épaisseurs non nulles, $e_3$ et $e'_3$, identiques ou différentes,

e) d'au moins une couche poreuse de revêtement (ER) constituée d'un matériau ou d'un mélange de matériaux, chimiquement compatible avec les matériaux, ou les mélanges de matériaux, desdits électrodes, collecteurs de courant, couche d'accrochage et électrolyte solide, dont la température de frittage est très proche des températures de frittage des matériaux, ou des mélanges de matériaux constituant lesdits électrodes, collecteurs de courant, couche d'accrochage et électrolyte solide, ladite couche (ER) étant plaquée soit sur la surface $S_3$ de (CC), soit sur la surface $S_3'$ de (CC'), ladite couche de revêtement ayant une surface $S_4$, et une épaisseur $e_4$ non nulle,

et caractérisée en ce que l'épaisseur E du volume de ladite membrane, est égale à la somme des épaisseurs de chacun des éléments cités.

Selon un premier aspect particulier, l'invention a pour objet une membrane telle que définie ci-dessus, dans laquelle le volume fini d'épaisseur E, comprend une deuxième couche d'accrochage (CA'), possédant, soit une structure cristalline conductrice par ions oxyde, soit une structure cristalline conductrice mixte, soit un mélange des deux structures cristallines précitées, plaquée sur la surface $S'_0$ de la couche dense (CD), et sur la surface externe $S'_1$ de laquelle, est plaquée l'électrode (EP'), ladite couche (CA') ayant une épaisseur $e'_1$ non nulle, une surface spécifique $s'_{1\omega}$ et une rugosité $R'_1$,

Selon un deuxième aspect particulier, l'invention a pour objet une membrane telle que définie ci-dessus, dans laquelle le volume fini d'épaisseur E, comprend une deuxième couche poreuse de revêtement (ER') constituée d'un matériau ou d'un mélange de matériaux, chimiquement compatibles avec les matériaux ou les mélanges de matériaux, desdits électrodes, collecteurs de courant, couches d'accrochage et électrolyte solide, dont la température de frittage est très proche des températures de frittage des matériaux ou des mélanges de matériaux constituant lesdits électrodes, collecteurs de courant et électrolyte solide, ladite couche (ER) étant plaquée sur celle des surfaces $S'_3$ de (CC') ou $S_3$ de (CC), qui n'est pas revêtue de la couche (ER), ladite couche (ER') ayant une surface $S'_4$, et une épaisseur $e'_4$ non nulle.

Dans la membrane telle que définie ci-dessus, le volume fini d'épaisseur E, peut comprendre aussi une couche intermédiaire ($CI_{23}$) constituée de matériaux issus de l'électrode (EP) et du collecteur de courant (CC), ladite couche

($CI_{23}$) ayant un coefficient d'expansion thermique ($CET_{23}$) de valeur comprise entre celui, $CET_2$, de (EP) et celui, $CET_3$, de (CC) et de préférence supérieur au $CET_2$ et inférieur à $CET_3$, plaquée sur la surface $S_2$ de (EP) et sur la surface externe $S_{23}$ de laquelle, est plaqué le collecteur (CC), ladite couche $CI_{23}$ ayant une épaisseur $e_{23}$ non nulle, une surface spécifique $s_{23\omega}$ et une rugosité $R_{23}$.

Il peut comprendre aussi une deuxième couche intermédiaire ($CI'_{23}$) constituée de matériaux issus de l'électrode (EP') et du collecteur de courant (CC'), ladite couche ($CI'_{23}$) ayant un coefficient d'expansion thermique ($CET'_{23}$) de valeur comprise entre celui, $CET'_2$, de (EP') et celui, $CET'_3$, de (CC') et de préférence supérieur au $CET'_2$ et inférieur à $CET'_3$, plaquée sur la surface $S'_2$ de (EP') et sur la surface externe $S'_{23}$ de laquelle, est plaqué le collecteur (CC'), ladite couche $CI'_{23}$ ayant une épaisseur $e'_{23}$ non nulle, une surface spécifique $s'_{23\omega}$ et une rugosité $R'_{23}$.

Il peut comprendre aussi une couche intermédiaire ($CI_{34}$) constituée de matériaux issus du collecteur de courant (CC) et de la couche de revêtement (ER), ladite couche ($CI_{34}$) ayant un coefficient d'expansion thermique ($CET_{34}$) de valeur comprise entre celui, $CET_3$, de (CC) et celui, $CET_4$, de (ER) et de préférence supérieur au $CET_3$ et inférieur à $CET_4$, plaquée sur la surface $S_3$ de (CC) et sur la surface externe $S_{34}$ de laquelle, est plaquée la couche de revêtement (ER), ladite couche $CI_{34}$ ayant une épaisseur $e_{34}$ non nulle, une surface spécifique $S_{34\omega}$ et une rugosité $R_{34}$.

Il peut comprendre enfin une deuxième couche intermédiaire ($CI'_{34}$) constituée de matériaux issus du collecteur de courant (CC') et de la couche de revêtement (ER'), ladite couche ($CI'_{34}$) ayant un coefficient d'expansion thermique ($CET'_{34}$) de valeur comprise entre celui, $CET'_3$, de (EP') et celui, $CET'_4$, de (ER') et de préférence supérieur au $CET'_3$ et inférieur à $CET'_4$, plaquée sur la surface $S'_3$ de (CC') et sur la surface externe $S'_{34}$ de laquelle, est plaquée la couche de revêtement (ER'), ladite couche $CI'_{34}$ ayant une épaisseur $e'_{3a}$ non nulle, une surface spécifique $s'_{34\omega}$ et une rugosité $R'_{34}$.

Comme l'illustrent les exemples décrits plus loin dans la présente description, le rôle de la ou des surfaces spécifiques et rugosités développées sur les faces $S_0$ et $S'_0$ de l'électrolyte solide est de permettre une meilleure "accroche" des dépôts sus-jacents successifs, électrodes, collecteurs de courant et couches protectrice, de multiplier "en volume" les points "triples" en délocalisant les réactions de réduction et d'oxydation de l'oxygène, pour aboutir à une amélioration des performances électrochimiques des cellules et de limiter les phénomènes de dégradation pouvant apparaître dans les conditions de fonctionnement, au cours du temps dus notamment à l'évacuation de l'oxygène produit et à l'effet Joule.

Par structure cristalline conductrice par ions oxyde on entend, dans le cadre de la présente invention, toute structure cristalline qui, à la température d'utilisation, se présente sous forme d'un réseau cristallin possédant des lacunes en ions oxydes. Les structures cristallines associées peuvent être par exemple, des phases cubique, fluorite, pérovskite, Brown - millerite, dites d'Aurivillius ou encore celles citées dans : J.C. Boivin et G. Mairesse, Chem. Mat., 1998, pp2870-2888; "Recent Material Developments in Fast Oxide Ion Conductors".

Par matériau ou mélange de matériaux, compatible chimiquement avec celui de l'électrolyte solide, des électrodes ou des collecteurs de courant, on désigne dans le présent exposé, tout matériau ou mélange de matériaux, qui, à une température de frittage comprise environ entre 600°C et 1200°C, n'entre pas en réaction chimique avec celui ou ceux de la couche qu'il revêt. Une telle réaction chimique serait éventuellement mise en évidence par l'apparition d'un ou plusieurs composés chimiques absents des matériaux ou des mélanges de matériaux initiaux.

Par poreuses, on indique dans le présent exposé, que les couches de matériaux concernées doivent être capables de laisser diffuser le dioxygène. De façon générale, leur indice de porosité est compris entre 10% et 70%, plus précisément entre 30 et 60 %.

Par surface spécifique de la couche dite "d'accrochage" on indique que la surface spécifique développée par ladite couche est comprise entre 0,01 et 500 m$^2$/g, plus précisément entre 0,1 et 50 m$^2$/g.

Par rugosité de la couche dite "d'accrochage" on indique que la rugosité de ladite couche est comprise entre 0 et 500 $\mu$m et plus particulièrement entre 10 et 300 $\mu$m.

Par conductrices mixtes, on indique dans le présent exposé, que les couches de matériaux concernés sont des conducteurs ioniques et électroniques.

Par températures de frittage très proches, on indique que la différence entre les températures de frittage de la couche dite "d'accrochage" et de l'électrolyte solide, de la couche intermédiaire et des couches sous et sus-jacentes et de la couche poreuse de revêtement et du collecteur de courant est inférieure ou égale à environ 500 °C, préférentiellement inférieure à 300 °C. En effet, lorsque cette différence devient trop importante, on observe un phénomène de délaminage entre les dépôts, signe d'une mauvaise adhérence des couches frittées. Le développement de la surface spécifique/rugosité en surface de l'électrolyte solide doit permettre une meilleure adhérence / accrochage des divers dépôts successifs et éviter de fait les phénomènes de délaminage et d'écaillage des couches poreuses successives.

Selon un troisième aspect particulier, l'invention a pour objet une membrane telle que définie ci-dessus, caractérisée en ce que $e_2 = e'_2$.

Selon un quatrième aspect particulier, l'invention a pour objet une membrane telle que définie ci-dessus, caractérisée en ce que $e_3 = e'_3$.

Selon un cinquième aspect particulier, l'invention a pour objet une membrane telle que définie ci-dessus, caractérisée en ce que $e_1 = e'_1$.

Selon un sixième aspect particulier, l'invention a pour objet une membrane telle que définie ci-dessus, caractérisée en ce que $e_{23} = e'_{23}$.

Selon un septième aspect particulier, l'invention a pour objet une membrane telle que définie ci-dessus, caractérisée en ce que $e_{34} = e'_{34}$.

Selon un huitième aspect particulier, l'invention a pour objet une membrane telle que définie ci-dessus, caractérisée en ce que $e_4 = e'_4$.

Dans la membrane céramique, objet de la présente invention, l'épaisseur $e_0$ est en général comprise entre environ 0,01 mm et environ 2 mm et plus particulièrement entre environ 0,05 mm et environ 1 mm, les épaisseurs $e_1$ et $e'_1$ sont est en général comprises environ entre 1 $\mu$m et 500 $\mu$m et plus particulièrement entre 10 $\mu$m et 300 $\mu$m, les épaisseurs $e_2$ et $e'_2$ sont en général comprises entre environ 1 - $\mu$m et environ 500 $\mu$m et plus particulièrement entre environ 10 $\mu$m et environ 300 $\mu$m, les épaisseurs $e_3$ et $e'_3$ sont en général comprises entre environ 1 $\mu$m et environ 500 $\mu$m et plus particulièrement entre environ 10 $\mu$m et environ 300 $\mu$m, les épaisseurs $e_4$ et $e'_4$ sont en général comprises entre environ 1 $\mu$m et environ 500 $\mu$m et plus particulièrement entre environ 20 $\mu$m et environ 300 $\mu$m, les épaisseurs $e_{23}$ et $e'_{23}$ sont en général comprises entre environ entre 1 $\mu$m et environ 500 $\mu$m et plus particulièrement entre environ 10 $\mu$m et environ 300 $\mu$m et, les épaisseurs $e_{34}$ et $e'_{34}$ sont en général comprises entre environ entre 1 $\mu$m et 500 $\mu$m et plus particulièrement entre 10 $\mu$m et 300 $\mu$m.

La membrane céramique, objet de la présente invention peut consister en une plaque de surface plane S et d'épaisseur E et caractérisée en ce que chacune des surfaces $S_0$, $S'_0$, $S_1$, $S_2$, $S'_2$, $S_3$, $S'_3$, $S_4$ et le cas échéant, $S'_1$, $S'_4$, $S_{23}$, $S'_{23}$, $S_{34}$ et $S'_{34}$, est égale à S. Dans ce cas, la longueur L de la plaque est en général comprise entre environ 1 cm et environ 1 m et plus particulièrement, entre 5 cm et environ 50 cm et sa largeur l, comprise entre environ 1 cm et environ 1 m et plus particulièrement entre 5 cm et environ 50 cm.

La membrane objet de la présente invention peut avoir aussi une forme tubulaire ouverte aux deux extrémités ou seulement à l'une de ses extrémités. Elle consiste alors en un cylindre creux ouvert à ses deux extrémités ou seulement à l'une d'entre elles, de diamètre extérieur D et de diamètre intérieur d et est caractérisée n ce que la couche de support est la couche dense (CD) de l'électrolyte solide, en ce que les surfaces $S_0$, $S'_0$, $S_1$, $S_2$, $S'_2$, $S_3$, $S'_3$, $S_4$ et le cas échéant, $S'_1$, $S'_4$, $S_{23}$, $S'_{23}$, $S_{34}$ et $S'_{34}$, sont cylindriques et coaxiales et en ce que l'épaisseur E est de la membrane est égale à la moitié de la différence (D - d). Dans ce cas, sa longueur L est comprise environ entre 1 cm et environ 1 m et plus particulièrement entre 10 cm et 50 cm.

L'électrolyte solide (CD), mis en œuvre dans la membrane céramique objet de la présente invention, est généralement choisi parmi les oxydes céramiques dopés qui, à la température d'utilisation, se présentent sous forme d'un réseau cristallin lacunaire en ions oxydes. Ils possèdent plus particulièrement une structure fluorite et sont de préférence choisis parmi les composés de formule (I) :

$$(M_\alpha O_\beta)_{1-x} (R_\gamma O_\delta)_x \qquad \text{(I)}$$

dans laquelle M représente au moins un atome trivalent ou tétravalent choisi parmi Bi, Ce, Zr, Ga, Th ou Hf, $\alpha$ et $\beta$ sont tels que la structure $M_\alpha O_\beta$ est électriquement neutre, R représente au moins un atome divalent ou trivalent choisi parmi Mg, Ca, Ba, Sr, Gd, Sc, Yb, Y, Sm ou La, $\gamma$ et $\delta$ sont tels que la structure $R_\gamma O_\delta$ est électriquement neutre, x est généralement compris entre 0,05 et 0,30 et plus particulièrement, entre 0,075 et 0,15.

Un électrolyte solide peut consister, par exemple, en un seul oxyde $MO_2$ associé à un ou à plusieurs oxydes $R_\gamma O_\delta$ ou bien en un mélange d'oxydes $MO_2$ associé à un ou à plusieurs oxydes $R_\gamma O_\delta$.

Comme oxydes céramiques de formule $M_\alpha O_\beta$, il y a principalement l'oxyde de zirconium ($ZrO_2$), l'oxyde de cérium ($CeO_2$), l'oxyde d'hafnium ($HfO_2$), l'oxyde de thorium ($ThO_2$), l'oxyde de gallium ($Ga_2O_3$) ou l'oxyde de bismuth ($Bi_2O_3$). Ces oxydes sont dopés avec un ou plusieurs oxydes choisis généralement parmi l'oxyde de magnésium ($MgO$), l'oxyde de calcium ($CaO$), l'oxyde de baryum ($BaO$), l'oxyde de strontium ($SrO$), l'oxyde de gadolinium ($Gd_2O_3$), l'oxyde d'erbium ($Er_2O_3$), l'oxyde d'indium ($In_2O_3$), l'oxyde de niobium ($Nb_2O_3$), l'oxyde de scandium ($Sc_2O_3$), l'oxyde d'ytterbium ($Yb_2O_3$), l'oxyde d'yttrium ($Y_2O_3$), l'oxyde de samarium ($Sm_2O_3$) et l'oxyde de lanthane ($La_2O_3$).

Comme principaux exemples d'électrolyte solide, il y a les zircones (oxydes de zirconium), les gallathes (matériaux à base d'oxyde de gallium), les matériaux de type BiMeVOx ou les oxydes de cérium stabilisés.

Selon un neuvième aspect particulier, l'invention a pour objet une membrane telle que définie ci-dessus, caractérisée en ce que l'électrolyte solide est l'oxyde de zirconium stabilisé à l'oxyde d'yttrium de formule (Ia) :

$$(ZrO_2)_{1-x} (Y_2O_3)_x \qquad \text{(Ia)}$$

dans laquelle x est compris entre 0,05 et 0,15 (appelé par la suite YSZ (x en % molaire). Ces composés travaillent à des températures comprises entre 700 et 1000°C.

Les électrodes (EP) et (EP'), associées à l'électrolyte solide, de compositions chimiques identiques ou différentes, sont notamment en un matériau ou en un mélange de matériaux de structure pérovskites ($ABO_3$) ou proches (pyrochlores ($A_2B_2O_7$), brown-millerite ($A_2B_2O_5$)) ou BiMeVOx (phases d'Aurivillius).

Les matériaux pérovskites, principaux matériaux d'électrodes, sont représentés par la formule (II) :

$$M_1M_2O_3, \qquad\qquad (II)$$

dans laquelle, $M_1$ représente un ou plusieurs atomes choisis dans les familles des alcalino terreux, des lanthanides et des actinides et plus particulièrement parmi La, Ce, Pr, Nd, Pm, Sm, Eu, Gd, Tb, Dy, Ho, Er, Tm, Yb, Lu, Y, ou les Mg, Ca, Sr ou Ba, $M_2$ représente un ou plusieurs atomes choisis parmi les métaux de transition, plus particulièrement parmi Sc, Ti, V, Cr, Mn, Fe, Co, Ni, Cu ou Zn.

Selon un dixième aspect particulier, l'invention a pour objet une membrane telle que définie ci-dessus, caractérisée en ce que les électrodes, de compositions identiques ou différentes, sont plus particulièrement choisies parmi l'oxyde de lanthane et de nickel ($LaNiO_3$), les manganites - lanthane - calcium ($Ca_uLa_vM\text{-}nO_w$), les manganites - lanthane - strontium ($La_uSr_vMnO_w$), les cobaltites - lanthane - strontium ($La_uSr_vCoO_w$), les cobaltites - lanthane - calcium ($Ca_u\text{-}La_vCoO_w$), les cobaltites - gadolinium - strontium ($Gd_uSr_yCoO_w$), les chromites - lanthane - strontium ($La_uSr_vCrO_w$), les ferrites - lanthane - strontium, ($La_uSr_vFeO_w$) ou les ferrocobaltites - lanthane - strontium ($La_uSr_vCO_dFe_rO_w$), dans lesquels u + v et c + d sont égaux à 1 et w est tel que la structure considérée est électriquement neutre.

Les couches (CA) et le cas échéant (CA'), développées de part et d'autre de la membrane céramique sont de composition identique ou différente de celle de la couche dense (CD) de l'électrolyte solide défini ci-dessus.

L'invention a de préférence pour objet une membrane céramique, telle que définie précédemment, dans laquelle les couches (CA) et CA') sont de composition chimique identique à celle de la couche dense CD d'électrolyte solide.

Dans ce cas et selon un onzième aspect particulier, l'invention a pour objet une membrane céramique, telle que définie ci-dessus, caractérisée en ce qu'elle comprend un volume fini non nul d'épaisseur totale non nulle E, comprenant :

a) une couche d'un électrolyte solide à gradient continu de porosité superficielle contrôlé (CE), ayant, à la température d'électrolyse, une structure cristalline conductrice par ions oxydes, d'épaisseur non nulle $e_0 + e_1 + e'_1$ et de surfaces externes opposées $S_1$ et $S'_1$ identiques, de surface spécifique $s_{1\omega}$ et $s'_{1\omega}$ identiques et de rugosité $R_1$ et $R'_1$ identiques.

b) de deux électrodes poreuses (EP) et (EP'), conductrices mixtes, de compositions chimiques identiques ou différentes, plaquées sur chacune des surface $S_1$ et $S'_1$ de (CE), lesdites électrodes ayant respectivement des surfaces externes $S_2$ et $S'_2$ non nulles, identiques ou différentes et des épaisseurs non nulles $e_2$, et $e'_2$, identiques ou différentes, et

c) de deux collecteurs de courant poreux (CC) et (CC'), de compositions chimiques identiques ou différentes, plaqués sur les surfaces $S_2$ et $S'_2$ de (EP) et (EP'), lesdits collecteurs de courant (CC) et (CC'), ayant respectivement des surfaces externe $S_3$ et $S_3'$ non nulles, identiques ou différentes et des épaisseurs non nulles, $e_3$ et $e'_3$, identiques ou différentes,

d) d'au moins une couche poreuse de revêtement (ER) constituée d'un matériau ou d'un mélange de matériaux, chimiquement compatible avec les matériaux, ou les mélanges de matériaux, desdits électrodes, collecteurs de courant et électrolyte solide à gradient continu de porosité superficielle contrôlée, dont la température de frittage est très proche des températures de frittage des matériaux, ou des mélanges de matériaux constituant lesdits électrodes, collecteurs de courant et électrolyte solide, ladite couche (ER) étant plaquée <u>soit</u> la surface $S_3$ de (CC), <u>soit</u> sur la surface $S_3'$ de (CC'), ladite couche de revêtement ayant une surface $S_4$, et une épaisseur $e_4$ non nulle,

et caractérisée en ce que l'épaisseur E du volume de ladite membrane, est égale à la somme des épaisseurs de chacun des éléments cités

La composition des couches d'accrochage (CA) et le cas échéant (CA'), peut également être un mélange des divers matériaux constituant la membrane céramique, à savoir l'électrolyte solide, les électrodes, les collecteurs de courant et la ou les couches protectrices, Dans ce cas, la composition des couches d'accrochage (CA) et le cas échéant (CA') sont de préférence soit en un mélange des matériaux constituant l'électrolyte solide et les électrodes (EP) et (EP'), soit en un mélange des matériaux constituant les électrodes (EP) et (EP') et tout particulièrement en un mélange de composés de formule (Ia) et de formule (II). Les couches d'accrochage (CA) et le cas échéant (CA') sont dans ce dernier cas, de composition chimique identiques ou différentes.

Les collecteurs de courant (CC) et (CC'), plaqués sur lesdites deux électrodes poreuses (EP) et (EP'), de compositions chimiques identiques ou différentes, sont constitués essentiellement, soit par un métal, soit par une laque de métal et plus particulièrement une laque d'or ou une laque d'argent, soit par un mélange métal / céramique "oxyde inerte", plus particulièrement un mélange métal / alumine, soit par un mélange métal/céramique oxyde "conducteur mixte", et plus particulièrement un mélange métal / matériau pérovskite, soit par un mélange métal / céramique oxyde "conducteur ionique" et plus particulièrement un mélange métal / zircone stabilisée à l'yttrium (8% mol.), soit par un mélange métal /céramique oxyde "conducteur électronique" et plus particulièrement un mélange métal / oxyde de nickel, soit par un mélange métal / carbure et plus particulièrement un mélange métal / carbure de silicium, soit par un mélange métal / nitrure et plus particulièrement un mélange métal / nitrure de silicium, soit par un mélange d'un ou de plusieurs des mélanges définis précédemment.

Le collecteur de courant peut également être défini comme étant issu d'un ou de plusieurs des mélanges définis ci-dessus dans lequel ou dans lesquels des agents porogènes ont été ajoutés ou non lors de la phase de synthèse.

Par agent porogène, on désigne tout matériau susceptible d'être éliminé par décomposition thermique lors de l'étape de déliantage préalable au frittage, en laissant des pores dans le matériau obtenu à l'issue de cette étape et sans laisser de résidus. Comme porogènes, on préfère les polymères existant sous forme particulaire et de forme relativement isotrope comme, par exemple, les cires de polypropylène micronisées (par exemple, PropylTex™270S ou Propyl-Tex™325S de MICRO POWDERS, Inc.) des polyamides (par exemple ORGASOL™ de ELF-ATOCHEM), des latex, du polytétrafluoroéthylène, des sphères de polystyrène. Comme porogènes, on utilise également des fibres de cellulose (par exemple ARBOCEL™BE600-10 de Rettenmeier), des amidons (par exemple amidon de maïs standard, amidon de blé standard SP ou fécule de pomme de terre de ROQUETTE FRERES, amidon de riz REMYRISE™DR de REMY) ou du graphite.

Le métal mis en oeuvre dans les collecteurs de courant est principalement choisi parmi les métaux de transition, plus particulièrement parmi l'argent, le cuivre, le nickel ou parmi les métaux nobles plus particulièrement parmi l'or, le platine ou le palladium. Il peut également s'agir de fils collecteurs de courant à base de matériaux oxydables, recouverts de matériaux ou d'alliages dits inoxydables, tels que par exemple, une fine couche d'or, d'argent ou de platine ou d'un mélange de deux ou trois de ces éléments.

Les collecteurs de courant sont plus particulièrement en un mélange d'un métal choisi parmi l'argent ou l'or, avec un ou plusieurs composés de formule (I) telle que définie précédemment avec éventuellement ajout d'agents porogènes ou, en un mélange d'un métal choisi parmi l'argent ou l'or, avec un ou plusieurs composés de formule (II) telle que définie précédemment avec éventuellement, ajout d'agents porogènes ou, en un mélange d'un métal choisi parmi l'argent ou l'or, avec un ou plusieurs composés de formules (I) et (II) telles que définies précédemment avec ou sans ajout d'agents porogènes.

Les deux collecteurs de courant sont tout particulièrement de composition identique et sont soit en un mélange d'argent et de zircone dopée à l'oxyde d'yttrium, de préférence YSZ(8%), soit en un mélange d'argent avec un ou plusieurs composés de formule (II), de préférence le manganite de lanthane dopé au strontium (LSM) et tout particulièrement $La_{0,9}Sr_{0,1}MnO_{3-\delta}$, soit en un mélange d'argent, de céramique "conductrice ionique" et de céramique "conductrice mixte" et de préférence le mélange Ag-YSZ(8%)-LSM.

La couche de revêtement (ER) et le cas échéant, la couche de revêtement (ER'), sont de compositions identiques ou différentes. Elles peuvent être conductrices mixtes, électroniques ou isolantes, tout en étant suffisamment poreuses, pour permettre la diffusion gazeuse de l'oxygène de part et d'autre de la membrane.

Lorsqu'elles sont isolantes, il s'agit par exemple d'un émail.

Lorsqu'elle sont conductrices mixte, il s'agit par exemple d'un matériau pérovskite ou d'un mélange de matériaux pérovskites ou d'un mélange de matériaux pérovskites ou de familles proches (pyrochlores, brown-millerite) et de conducteurs purement ioniques ou d'un mélange de matériaux conducteurs métalliques et d'un ou des composés définis précédemment.

Selon un douzième aspect particulier, l'invention a pour objet une membrane céramique, telle que définie ci-dessus, dans laquelle les couches de revêtement (ER) et, le cas échéant (ER'), sont isolantes.

Selon un treizième aspect particulier, l'invention a pour objet une membrane céramique, telle que définie ci-dessus, dans laquelle les couches de revêtement (ER) et, le cas échéant (ER'), sont en des composés ou des mélanges de composés de formule (II) et plus particulièrement en des composés de formule $La_uSr_vCo_dFe_cO_w$, dans lesquels u + v et c + d sont égaux à 1 et w est tel que la structure en cause est électriquement neutre, et de préférence, en un composé de formule (IIa) :

$$La_{0,8}Sr_{0,2}Co_{0,8}Fe_{0,2}O_w \qquad\qquad (IIa)$$

dans laquelle w est tel que la structure de formule (IIa), est électriquement neutre.

Selon un quatorzième aspect particulier, l'invention a pour objet une membrane céramique, telle que définie ci-dessus, dans laquelle chacun des collecteurs de courant (CC) et (CC'), est relié à la partie extérieure du circuit, par un fil conducteur électronique, en un métal identique ou différent à celui que lesdits collecteurs de courant comportent.

Selon une variante de la présente invention, la membrane céramique de surface spécifique/rugosité développée sur l'électrolyte solide, cylindrique telle que définie précédemment, est remplie de billes de mullite ou de zircone ou d'alumine, de façon à améliorer la fixation dudit fil audit collecteur de courant. La nature des billes peut également être de type métallique ou carbure de métal, ou de billes de mullite ou zircone ou d'alumine, recouverte d'une couche de collecteur de courant de même nature ou de nature différente de la couche de collecteur de courant de la cellule électrochimique tubulaire. Les billes peuvent également être de type pérovskite de même composition chimique par exemple que la couche protectrice.

La membrane céramique de surface spécifique/rugosité développée sur les faces de l'électrolyte solide S et S', objet de la présente invention, est préparée par des séquences successives consistant en un dépôt d'un matériau donné, disponible dans le commerce, suivie du frittage de l'ensemble résultant, à partir de l'électrolyte solide pris comme matériau de support de ladite membrane et possédant, de part et d'autre, une surface/rugosité développée ou non, de même nature ou non, que le matériau électrolyte solide. Ces séquences d'opérations sont bien connues de l'homme du métier. De façon générale, la membrane céramique électrolyte solide est réalisée en mettant en oeuvre une ou plusieurs techniques classiques de mise en forme céramique, comme par exemples le pressage isostatique à froid, le pressage isostatique à chaud (Hot Isostatic Pressure), l'extrusion, le coulage en bande (tape casting) ou la sérigraphie. Les couches d'accrochage permettant de développer de la surface spécifique et de la rugosité de part et d'autre sur les surfaces $S_0$ et $S'_0$ de l'électrolyte solide sont déposées, soit sur la membrane en cru (avant frittage), soit sur la membrane pré-frittée, soit sur la membrane céramique après frittage.

Le développement de la surface spécifique et de la rugosité consiste à déposer en surface de la membrane céramique un dépôt contenant soit le même matériau que l'électrolyte solide, soit un ou des matériaux constituants la cellule électrochimique, soit un mélange de matériaux constituants la cellule électrochimique. Les dépôts de cette couche "d'accrochage" sur l'électrolyte solide dense, de forme planaire ou/et tubulaire, sont réalisés par des techniques bien connues de l'homme du métier, à savoir de manière non exhaustive, par pulvérisation d'une suspension de poudre sur l'électrolyte solide (spray), par dépôt d'une suspension de poudre par remplissage/vidage (dip coating) ou par dépôt d'une suspension de poudre par pinceau (painting).

Après dépôt de la couche dite "d'accrochage", la membrane céramique est soit frittée de manière à obtenir un l'ensemble (CA), (CD)et, le cas échéant (CA'), possédant sur ces surfaces externes $S_1$ et éventuellement $S'_1$ de la surface spécifique ($S_{1\omega}$ et $S'_{1\omega}$) et de rugosité $R_1$ et $R'_1$, soit reçoit directement les couches successives d'électrode, de collecteur de courant et de couche protectrice. Les dépôts successifs (électrode, collecteur de courant, couche protectrice et éventuellement couche(s) intermédiaire(s) entre les divers dépôts pour harmoniser les CET) sont réalisés par peinture (painting), par pulvérisation (spray), par enrobage par immersion (dip coating) ou par sérigrahie, que ce soit sur la face interne ou sur la face externe du dispositif. Après le dépôt de chaque couche, on procède au frittage sous air, à la température de frittage dudit matériau, comprise entre 600°C et 1500 °C selon les matériaux, pendant quelques heures, généralement de 0,25 à 10 heures. De même, l'électrolyte solide de surface spécifique/rugosité, membrane céramique de forme géométrique tubulaire, planaire ou elliptique, est préparé à partir de produits commerciaux et est mis en forme selon des méthodes connues de l'homme du métier et décrites précédemment. On entend par surface spécifique une surface comprise entre 0,01 et 500 m²/g, et plus particulièrement entre 0,1 et 50 m²/g. On entend par rugosité R une valeur comprise entre 0 et 500 $\mu$m et plus précisément entre 10 et 300 $\mu$m.

Une variante consiste à réaliser en une seule étape la fabrication de l'électrolyte solide dense possédant une surface spécifique/rugosité en surface. Cette méthode est décrite dans la demande de brevet français N° 00 15919 déposée le 07 décembre 2000. Elle comprend les étapes suivantes :

une étape ($P_a$), de préparation d'une suspension de porogènes (particules, fibres ou plaquettes) solides, ou d'un mélange de porogènes solides de taille et/ou de forme et/ou de nature différentes, dans un solvant en présence si nécessaire, d'un liant et/ou d'un plastifiant, et/ou d'un autre composé organique soluble dans le solvant,
une étape ($P_b$), de coulage de ladite suspension formée à l'étape ($P_a$),
une étape ($P_c$), d'évaporation dudit solvant pour former un substrat porogène poreux,
une étape ($Q_a$), de préparation d'une suspension de particules de céramique solides dans un solvant en présence d'un dispersant,
une étape ($Q_b$), d'addition dans la suspension préparée à l'étape ($Q_a$), d'un liant et éventuellement d'un plastifiant,
une étape ($Q_d$), de désaération de ladite suspension,
une étape (A) d'infiltration du substrat porogène poreux d'épaisseur contrôlée, par la suspension de matériau céramique,
une étape (B) d'évaporation du solvant, pour former une structure composite porogène/céramique solide,
une étape de découpe (B') de la structure composite en éléments de structure ($s_i$),
une étape d'empilement tête-bêche, d'éléments $S_i$ deux par deux, pour former un ensemble (E),

une étape de thermocompression de (E),
une étape (C), de déliantage, et
une étape (D), de frittage.

Selon un avant-dernier aspect de la-présente invention, celle-ci a pour objet l'utilisation d'une membrane céramique, telle que définie précédemment, pour séparer l'oxygène de l'air ou d'un mélange gazeux le contenant et plus particulièrement pour produire l'oxygène ultra - pur (pureté > 99,9 %) et sous pression plus particulièrement à des valeurs comprises entre 1 et 50 x $10^5$ Pa (entre 1 et 50 bars), dans le cas de production en interne d'unités tubulaires, entre 1 et 150 x $10^5$ Pa (entre 1 et 150 bars) dans le cadre de production en externe du tube dans une enceinte fermée.

L'invention a aussi pour objet l'utilisation d'une membrane telle que définie précédemment, pour analyser la présence d'oxygène dans une atmosphère gazeuse.

Selon un dernier aspect de la présente invention, celle a pour objet un procédé de préparation d'oxygène ultra - pur consistant en la séparation de l'oxygène de l'air par conduction ionique à travers une membrane céramique, telle que définie précédemment, un procédé d'élimination de l'oxygène d'une atmosphère gazeuse dans laquelle sont effectuées des applications nécessitant des atmosphères à faible teneur en oxygène ou sans oxygène, consistant en la séparation de l'oxygène de ladite atmosphère, par conduction ionique à travers ladite membrane céramique, et un procédé de production d'énergie thermique et électrique au sein d'une pile à combustible solide, par réaction de l'oxygène et de l'hydrogène, caractérisé en ce que ledit oxygène est obtenu en le séparant de l'air à travers ladite membrane céramique.

Les exemples suivants illustrent l'invention sans toutefois la limiter.

## A) Préparation de la cellule électrochimique

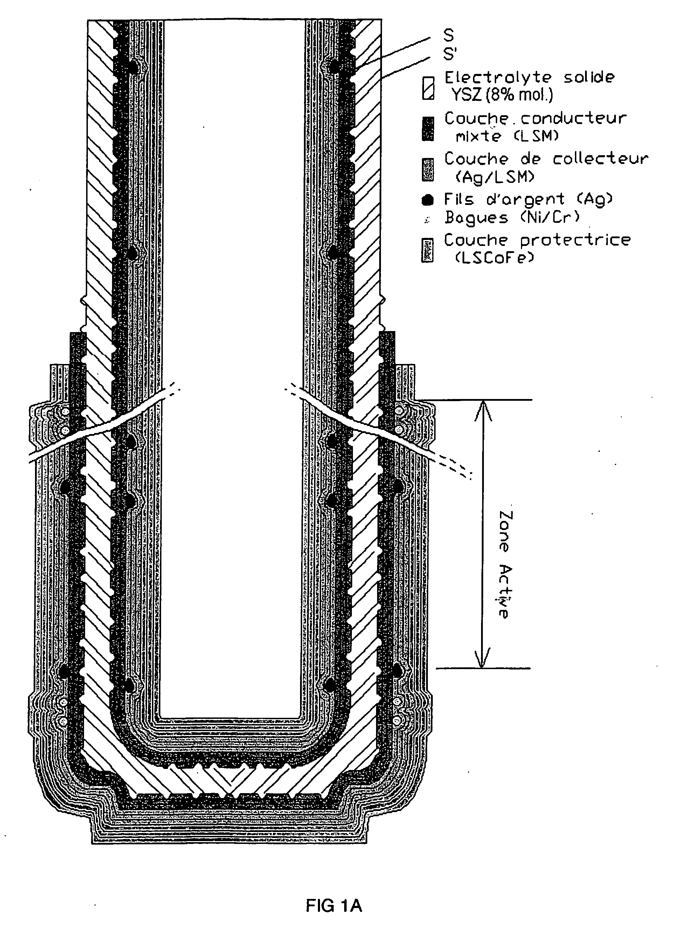

On a analysé les propriétés électrochimiques d'une cellule tubulaire illustrée par la figure 1A, présentant sur ses deux faces S et S' de la surface spécifique/rugosité développée.

La cellule est constituée par :

un électrolyte solide dense YSZ (8% mol.) de surface spécifique ($s_\omega$, $s'_\omega$)/rugosité (R, R') de même nature (épaisseurs de dépôt identique : e' = e"),

deux électrodes en manganite de lanthane dopé au strontium (LSM), dans ce cas $La_{0,9}Sr_{0,1}MnO_{3-\delta}$,

de deux collecteurs de courant à base de cermet Ag-LSM (50/50, vol.) et

de deux couches protectrices issue de la famille des ferrocobaltite de lanthane, dans ce cas en LSCoFe ($La_{0,8}Sr_{0,2}Co_{0,8}Fe_{0.2}O_w$).

Après le dépôt de chaque couche (couche dite "d'accrochage", électrode, collecteur de courant, couche protectrice), le tube a été fritté sous air à des température comprises entre 600 et 1500 °C, pendant quelques heures, avec des paliers de température compris entre 0,25 heure et 6 heures. Le système est parfaitement symétrique en terme de dépôt.

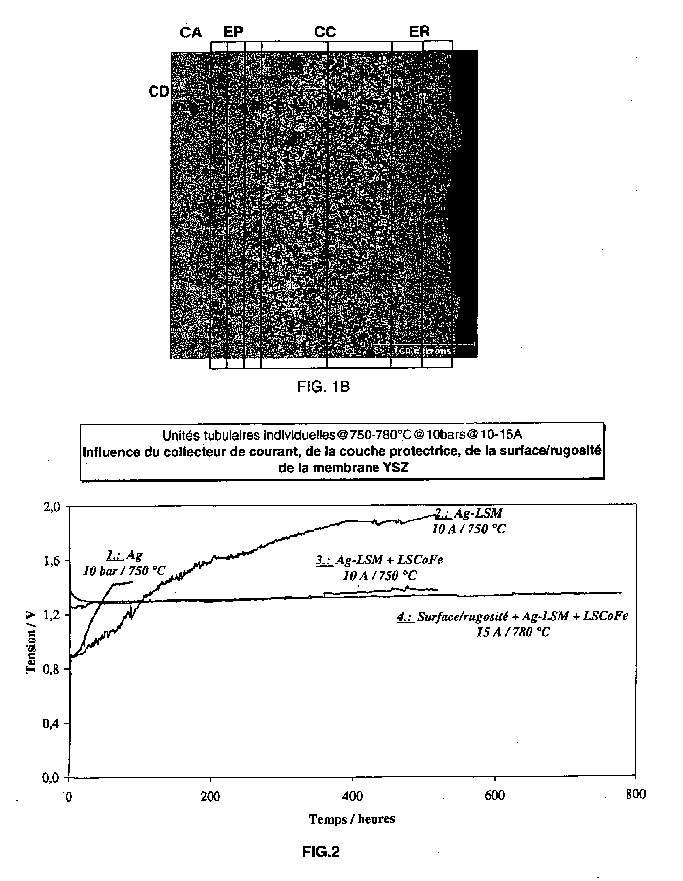

La figure 1B décrit les structures/microstructures de la cellule décrite précédemment en terme d'épaisseurs de dépôts, de tailles et formes de particules, d'états des interfaces,

La photographie MEB permet de mettre en évidence les différentes épaisseurs des couches successives :

couche (CD) : 1 mm [YSZ (8% mol.)]
couche (CA) : 1 - 100 $\mu$m surface / rugosité [YSZ (8% mol.)] ;
électrode (EP) : 16-30 $\mu$m (LSM)
collecteur de courant (CC) : 100 - 120 $\mu$m (Ag-LSM)
couche de revêtement (ER) : 50 - 90 $\mu$m / couche protectrice (LSCoFe).

## Exemple 1 : Influence de l'architecture et structure-microstructure de cellules céramiques YSZ (8% mol.) / paramètres de fonctionnement : température 750-780 °C, pression (interne d'oxygène) 10x10$^5$ Pa (10 bars), intensité : 10-15A

On a préparé plusieurs cellules électrochimiques tubulaires (Cellule 1 à Cellule 4), constituées

- d'un électrolyte solide en zircone stabilisée à l'yttrium [YSZ(8%)] de longueur égale à 350 mm, de surface active égale à 68 $cm^2$ et de diamètre intérieur égal à 9 mm,
- de deux électrodes en manganite de lanthane dopé au strontium (LSM : $La_{0.9}Sr_{0.1}MnO_x$) d'épaisseur 15 à 30 $\mu$m et porosité de 30 à 50%,

- de deux collecteurs de courant de compositions diverses :

laque d'argent (épaisseur : 100 -120 $\mu$m, faible porosité) (**Cellule 1**) ou
cermet Ag/LSM(50 / 50 en vol.) (épaisseur : 100 - 120 $\mu$m, porosité entre 30 et 50 %) (**Cellule 2, Cellule 3, Cellule 4**), et éventuellement
d'une couche protectrice sur chacune des faces de la membrane en LSCoFe (La$_{0.8}$Sr$_{0.2}$Co$_{0.2}$Fe$_{0.2}$O$_w$) (**Cellule 3 ,Cellule 4**) (épaisseur : 50-90 $\mu$m ; porosité: 20-70%) (conditions de dépôt : 800°C / 0,5-2 h).

Les cellules sont d'épaisseur égale soit à 0,5 mm pour les unités ayant des collecteurs de courant en argent ou en cermet Ag - LSM (**Cellule 1, Cellule 2**), soit à 0,92 mm pour les unités ayant des collecteurs de courant en cermet Ag - LSM et des couches protectrices en LSCoFe avec ou sans surface "d'accrochage" (**Cellule 3, Cellule 4**). Parmi les membranes testées, une d'entre elles présente en outre (**Cellule 4**) de la surface spécifique/rugosité en surface de l'électrolyte solide YSZ et de même nature (cf. figure 1 A et 1 B).

Les unités tubulaires ont fonctionné en continu durant au moins 5 jours (120 heures) sous 10x10$^5$ Pa (10 bars) d'oxygène, à 750 ou 780 °C (production d'oxygène en interne des cellules).

La durée de vie des unités (de quelques jours à plus d'un mois) est fonction des l'architectures et des structures-microstructures des membranes céramiques (choix du collecteur de courant, présence ou non de couche protectrice, absence ou non de surface spécifique/rugosité en surface de l'électrolyte solide).

Dans tous les cas de figure, le rendement faradique (rapport débit O$_2$ expérimental / débit O$_2$ théorique) est de 100 %.

Les unités ne présentant pas de couche protectrice à base de ferrocobaltite (LSCoFe) et de surface spécifique/ rugosité en surface de l'électrolyte solide se dégradent très rapidement (augmentation des potentiels de cellules de 55% en 100 h de fonctionnement continu pour le collecteur de courant à base de laque d'argent, de 18-20% en 100h pour le collecteur de courant à base de cermet argent-LSM).

Les augmentations initiales importantes des potentiels de cellule pour ces deux cellules sont dans un premier temps liées, en raison des conditions opératoires (température de travail : 750-780 °C) et au balayage sous air côté cathodique (en externe des unités) et à des phénomènes de ségrégation-frittage et/ou d'évaporation des particules d'argent lors du fonctionnement.

L'ajout d'une couche protectrice de part et d'autre de la cellule, ralentit fortement la dégradation de l'unité (augmentation du potentiel de cellule de l'ordre de 1 % en 100 h de fonctionnement continu) sans toutefois définitivement l'arrêter. La présence de cette couche permet de limiter les phénomènes de délaminage de la couche de collecteur de courant et de ralentir fortement la ségrégation des particules d'argent. La cause première des phénomènes de dégradation n'est plus celles décrites précédemment, mais le décollement des divers dépôts aux interfaces et principalement à la surface de l'électrolyte solide dense.

L'unité tubulaire présentant en surface de l'électrolyte solide dense une couche dite "d'accrochage" (développement de surface spécifique/rugosité) de même nature que l'électrolyte solide, à savoir YSZ (8% mol.), ainsi qu'une couche dite "protectrice", a dans des conditions opératoires plus sévères (780 °C et 15 A au lieu de 750 °C et 10 A), une évolution de son potentiel de cellule <1 % / 1 000 h (42 jours) de fonctionnement continu. Les résultats sont représentés sur la figure 2 et dans le tableau 1.

La figure 2 représente les fonctions V = f(t) et met en évidence la performance électrochimique de la cellule céramique YSZ d'architecture symétrique et de structures-microstructures selon l'invention, par rapport aux cellules de l'état de la technique. Chacune des courbes 1 à 4 se rapporte respectivement à chacun des cellules 1 à 4 :

**Cellule 1** : électrodes : LSM ; collecteurs de courant : laque d'argent ; <u>pas de couche protectrice</u> ; <u>pas de couche d'accrochage sur la membrane</u> YSZ ;
**Cellule 2** : électrodes : LSM ; collecteurs de courant : cermet argent-LSM ; <u>pas de couche protectrice</u> ; <u>pas de couche d'accrochage sur la membrane YSZ</u> ;
**Cellule 3** : électrodes LSM ; collecteurs de courant : cermet argent-LSM ; couche protectrice : LSCoFe ; <u>pas de couche d'accrochage sur la membrane YSZ ;</u> et
**Cellule 4** : électrodes LSM ; collecteur de courant : cermet argent-LSM ; couche protectrice : LSCoFe ; surface/ rugosité développée sur la membrane YSZ.

**Tableau 1 :** Performances électrochimiques de cellules céramiques YSZ d'architecture symétrique et de structures-microstructures différentes

| Cellules | Conditions opératoires | Performances électrochimiques initiales | Dégradation (voltage) |
|---|---|---|---|
| Cellule 1 | 750°C / 10 bars / 80 h | 10 A - 0,15 A/cm $^2$- 0,95 V | 55 % / 100 h |
| Cellule 2 | 750 °C / 10 bars / 500 h | 10 A - 0,15 A/cm$^2$ - 0,95 V | 18-20 % / 100 h |
| Cellule 3 | 750 °C / 10 bars / 500 h | 10 A - 0,15 A/cm$^2$ -1,30 V | 1 % / 100 h |
| Cellule 4 | 780 °C / 10 bars / 800 h | 15 A - 0,23 A/cm$^2$ -1,30 V | < 1 % / 1 000 h |

Les variations de potentiels initiaux des différentes unités, entre 0,95 et 1,3 Volts, sont en partie due à l'inhomogénéité thermique de certains fours et à l'épaisseur de l'électrolyte solide dense (0,5 ou 0,92 mm). Les dépôts des différentes couches (électrodes, collecteurs de courant, couches protectrices) sont réalisés par la technique de dépôt remplissage-vidage (dip coating). La surface "d'accrochage" est de même nature que l'électrolyte solide dense (YSZ 8% mol.). Les dépôts interne et externe sont réalisés soit par spray, soit par dip coating sur l'électrolyte solide pré-fritté. La membrane est ensuite frittée avant dépôt des diverses couches.

**Exemple 2 : Influence des microstructures des différents dépôts sur cellules céramiques YSZ (8% mol.) de surface spécifique/rugosité. Paramètres de fonctionnement : température 780-800 °C, pression (interne d'oxygène) : 10x10$^5$ Pa (10 bars), intensité : 10-15-17 A**

On a préparé plusieurs cellules électrochimiques tubulaires (Cellule 5 à Cellule 7), constituées

- d'un électrolyte solide en zircone stabilisée à l'yttrium [YSZ(8%)] de longueur égale à 350 mm, de surface active égale à 68 cm$^2$ et de diamètre intérieur égal à 9 mm, et présentant de la surface spécifique/rugosité en les deux surfaces de l'électrolyte solide YSZ et de même nature et de rugosité R et R' entre 10 $\mu$m et 100$\mu$m
- de deux électrodes en manganite de lanthane dopé au strontium (LSM : La$_{0,9}$Sr$_{0,1}$MnO$_x$) d'épaisseur 15 à 30 $\mu$m et de porosité de 30 à 50%,
- de deux collecteurs de courant en cermet Ag - LSM (50/50 en vol.) d'épaisseur : 60 à 80 $\mu$m (**Cellule 5, Cellule 7**) et 120 à 130 $\mu$m (**Cellule 6**), de porosité entre 30 et 50 %),

d'une couche protectrice sur chacune des faces de la membrane en LSCoFe (La$_{0,8}$Sr$_{0,2}$Co$_{0,8}$Fe$_{0,2}$O$_w$) (**Cellule 3 , Cellule 4**) (épaisseur : 30-40 $\mu$m (**Cellule 5, Cellule 7**) et 60-80 $\mu$m (**Cellule 6**) ; porosité : 20-70% conditions de dépôt : 800°C / 0,5-2 h).

Les cellules sont d'épaisseur égale à 0,92 mm.

Les paramètres expérimentaux variables sont les épaisseurs de dépôts et la présence ou non de couche(s) intermédiaire(s) entre les divers dépôts. Le rôle de la couche intermédiaire entre deux dépôts est une harmonisation des CET entre les divers dépôts de manière à limiter les phénomènes de décollement/délaminage. Un seul cas d'étude est présenté. Il s'agit d'une couche intermédiaire comprise entre l'électrode LSM et le collecteur de courant Ag-LSM (Cellule 7). La composition de cette couche intermédiaire est YSZ-Ag-LSM (CET intermédiaire entre la couche d'électrode sous-jacente et de collecteur de courant sus-jacente).

La température de fonctionnement est soit de 780 soit de 800 °C et le gradient de température est de l'ordre de +/- 25°C sur la zone active.

Les dépôts des différentes couches (surface d'accrochage, électrodes, collecteurs de courant, couches protectrices) sont réalisés par la technique de dépôt remplissage-vidage (dip coating).

Les systèmes YSZ + surfaces d'accrochages interne et externe, quelle que soit la structure (couche intermédiaire ou non) et la microstructure (épaisseurs des dépôts), sont stables dans les conditions opératoires et présentent une dégradation inférieure à 1 % après 1000 h de fonctionnement. Le rendement faradique (rapport entre le débit expérimental et le débit théorique) est de 100 %.

En fonction des épaisseurs de dépôt, le potentiel initial varie respectivement de 1,40 V (épaisseur collecteur de courant : 60-80 $\mu$m ; couche protectrice : 30-40 $\mu$m) et 1,35 V (épaisseur collecteur de courant : 120-130 $\mu$m ; couche protectrice : 60-80 $\mu$m).

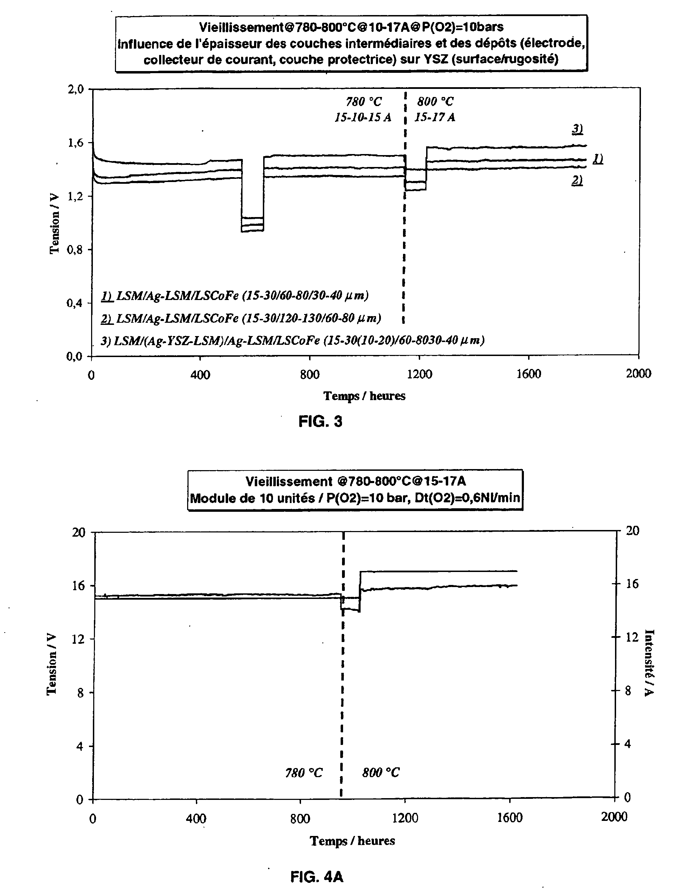

Dans le cas d'ajout d'une couche intermédiaire (épaisseur : 10-20 $\mu$m) entre l'électrode LSM et le collecteur de courant Ag-LSM (épaisseur : 60-80 $\mu$m) le potentiel initial est de 1,50 V. Ces variations des potentiels initiaux sont liées soit, pour une structure identique, à la quantité de particules conductrices déposée par unité de volume aboutissant à une baisse de la résistivité totale des dépôts, soit au rajout d'une couche intermédiaire légèrement plus résistive qu'un collecteur de courant aboutissant à une surtension. Les résultats sont représentés sur la figure 3 et dans le tableau 1.

La figure 3 représente les fonctions V = f(t) et met en évidence la performance électrochimique de la cellule céramique YSZ d'architecture symétrique et de structures-microstructures comprenant des couches intermédiaires entre les électrodes et les collecteurs de courant selon l'invention, par rapport aux cellules n'en ayant pas. Chacune des courbes 1 à 3 se rapporte respectivement à chacun des Cellules 5 à 7 :

**Cellule 5** : électrode LSM (épaisseur : 15-30 $\mu$m, porosité : 30-50 % ; collecteur de courant : cermet argent-LSM (épaisseur : 60-80 $\mu$m, porosité : 30-50 %) ; couche protectrice : LSCoFe (épaisseur : 30-40 $\mu$m, porosité : 20-70%, pas présence de couche intermédiaire entre les dépôts pour harmonisation des CET,

**Cellule 6** : électrode LSM (épaisseur : 15-30 $\mu$m, porosité : 30-50 %); collecteur de courant : cermet argent-LSM (épaisseur : 120-130 $\mu$m, porosité : 30-50 %) ; couche protectrice : LSCoFe (épaisseur : 60-80 $\mu$m, porosité : 20-70%), pas présence de couche intermédiaire entre les dépôts pour harmonisation des CET ;

**Cellule 7** : électrode LSM (épaisseur : 15-30 $\mu$m, porosité : 30-50 %); collecteur de courant : cermet argent-LSM (épaisseur : 60-80 $\mu$m, porosité : 30-50 %) ; couche protectrice : LSCoFe (épaisseur : 30-40 $\mu$m, porosité : 20-70%) ; Présence d'une couche intermédiaire entre les dépôts d'électrode et de collecteur de courant pour harmonisation des CET - dépôt YSZ/Ag/LSM (épaisseur : 10-20 $\mu$m, porosité : 30-50%).

**Tableau 2 :** Performances électrochimiques de cellules céramiques YSZ, avec surface d'accrochage, de structure (présence ou non de couches intermédiaires) et de microstructure (épaisseurs et porosités des dépôts) différentes

| Cellules | Conditions opératoires | Performances électro-chimiques initiales | Dégradation (voltage) |
|---|---|---|---|
| Cellule 5 | 780 °C / 10 bars 1 150 h puis 800 °C / 10 bars 650 h | 15 A - 0,23 A/cm$^2$ 1,40 V puis 17 A - 0,25 A/cm$^2$ 1,45 V | <1 % / 1 000 h |
| Cellule 6 | 780 °C / 10 bars 1 150h puis 800 °C / 10 bars 650 h | 15 A - 0,23 A/cm$^2$ 1,35 V puis 17 A - 0,25 A/cm$^2$ 1,40 V | < 1 % / 1 000 h |
| Cellule 7 | 780°C / 10 bars 1 150 h puis 800 °C/10 bars 650 h | 15 A - 0,23 A/cm$^2$ 1,50 V puis 17 A - 0,25 A/cm$^2$ 1,55 V | < 1 % /1 000 h |

**Exemple 3 : Module de 10 cellules céramiques YSZ (8% mol.) de surface spécifique/rugosité et de structure/ microstructure LSM(15-30 $\mu$m)/Ag-LSM (60-80 $\mu$m) / LSCoFe (30-40 $\mu$m) / paramètres de fonctionnement : Température 780-800 °C, pression (interne d'oxygène) : 10x10$^5$ Pa (10 bars), intensité : 10-15-17 A**

On utilise une cellule électrochimique tubulaire identique à celle de l'exemple 2, cellule 5, en termes d'électrolyte solide + couche "d'accrochage", d'électrode LSM, de collecteur de courant en cermet Ag-LSM et de couche protectrice LSCoFe. Le système est parfaitement symétrique.

La cellule tubulaire électrochimique de base constituant le module de 10 unités; est constituée :

d'un électrolyte solide en YSZ(8%) de longueur égale à 350 mm, de surface active à 68 cm$^2$ et de diamètre intérieur égal à 7,5 mm) possédant en interne et en externe une surface "d'accrochage" (développement de surface spécifique/ rugosité) d'une épaisseur comprise entre 10 et 100 $\mu$m,

de deux électrodes en manganite de lanthane dopé au strontium (LSM : $La_{0.9}Sr_{0.1}MnO_x$) (épaisseurs : 15-30 $\mu$m ; porosité : 30-50%),

de deux collecteurs de courant en cermet Ag-LSM ((50/50 en vol.) (épaisseur : 60-80 $\mu$m ; porosité entre 30 et 50 %) et d'une couche protectrice sur chacune des faces de la membrane en LSCoFe ($La_{0.8}Sr_{0.2}Co_{0.8}Fe_{0.2}O_w$) (épaisseur : 30-40 $\mu$m, porosité : 30-50%) (conditions de dépôt : 800 °C/0,5 h). L'épaisseur totale est égale à 0,92 mm.

Les dépôts des différentes couches (couches d'accrochage, électrodes, collecteurs de courant, couches protectrices) sont réalisés par enrobage par immersion (dip coating).

Les résultats présentés concernent un système tubulaire constitué de dix cellules électrochimiques élémentaires. Le système a fonctionné en continu durant plus de 75 jours (1 800 heures) sous $10 \times 10^5$ Pa (10 bars) d'oxygène entre 780 et 800 °C (production d'oxygène dans les unités). Le potentiel total du système de dix cellules se stabilise rapidement (après quelques heures) à 15,25 V, soit environ 1,5 V par cellule en moyenne. Le rendement faradique est de 100%.

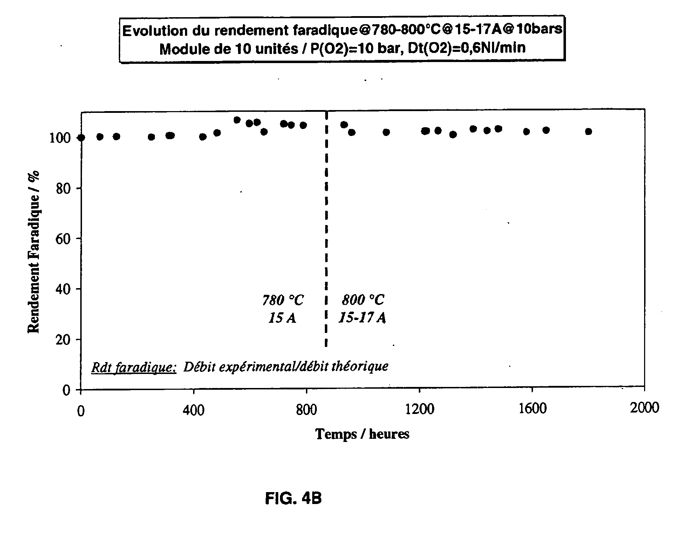

Les résultats sont représentés par les figures 4A et 4B ainsi que dans le tableau 3.

La Figure 4A représente les fonctions V = f(t) et I = f(t) pour un module de 10 membranes céramiques avec surface "d'accrochage" interne/externe, de structure LSM/Ag-LSM/LSCoFe.

La Figure 4B représente l'évolution du rendement faradique au cours du temps d'un module de 10 membranes céramiques avec surface "d'accrochage" interne/externe, de structure LSM/Ag-LSM/LSCoFe.

**Tableau 3 :** Performances électrochimiques d'un module de 10 membranes céramiques avec surface "d'accrochage" interne/externe, de structure LSM/Ag-LSM/LSCoFe

| Conditions opératoires | Performances électrochimiques initiales | Dégradation (voltage) |
|---|---|---|
| 780-800 °C - 10 bars - 15 A - 1 150 h puis 800 °C - 10 bars - 17 A - 650 h | 15 A - 0,23 A/cm$^2$ 15,25 V <br> 17 A - 0,25 A/cm$^2$ 15,70 V | < 1% - 1 000 h <br> < 2 % / 1 000 h |

**Exemple 4 : Pureté de l'oxygène produit par un module de 10 unités YSZ décrit dans l'exemple 3 / paramètres de fonctionnement : température 780-800 °C, pression (interne d'oxygène) : $10 \times 10^5$ Pa (10 bars), débit d'oxygène : 0,6 Nl/min (analyse après 2 mois de fonctionnement continu)**

Une analyse du gaz produit ($O_2$) sous une pression de 10 bars a été réalisée sur un module de 10 unités après plus de 2 mois de fonctionnement continu. L'analyse gaz a été réalisée par chromatographie en phase gazeuse et spectrométrie de masse. Les résultats ont révélé un niveau d'impuretés, essentiellement de l'azote, inférieur à 100 ppb. Le détail de l'analyse est reporté dans le tableau 4.

**Tableau 4 :** Analyse de l'oxygène produit par un module de 10 membranes céramiques avec surface "d'accrochage" interne/externe, de structure LSM/Ag-LSM/LSCoFe (P($O_2$)= 10 bars, D($O_2$)= 0,6 Nl/min)

| Gaz | Niveau d'impuretés (PPb) |
|---|---|
| Argon (Ar) | ND* < 20 |
| Azote ($N_2$) | 75 |
| Hydrogène ($H_2$) | ND < 5 |
| Méthane ($CH_4$) | ND < 5 |
| Hydrocarbures ($C_nH_m$) | ND < 5 |
| *ND : Non Detecté (teneur en dessous du seuil de détection des appareils d'analyse) | |

**Conclusion**

Dans les quatre exemples, l'apport de couches protectrices à base de LSCoFe ralentit très fortement le phénomène de vieillissement des unités YSZ sous faible densité de courant (< 0,15 A/cm$^2$) et à basse température de fonctionnement (750 °C), sans toutefois le ralentir définitivement sur des durées supérieures à 2 mois. Il est à signaler que la couche protectrice doit absolument être inerte chimiquement non seulement vis-à-vis du matériau collecteur de courant mais également des matériaux d'électrode(s) et de l'électrolyte solide. Le développement sur l'électrolyte solide dense de surface spécifique/rugosité permet une meilleure "accroche" des dépôts successifs, principalement l'électrode et le collecteur de courant et multiple parallèlement le nombre de points dits "triples" en électrochimie (points de contact entre l'électrolyte solide, l'électrode et le gaz ($O_2$)).

Il y a délocalisation de la réaction d'électrode dans le volume et non plus uniquement à l'interface "plane" électrolyte solide/électrode.

Les conséquences du développement de cette couche d'accrochage, de même nature que l'électrolyte solide et/ou l'électrode, combinée avec une structure électrode/collecteur de courant/couche protectrice, sont multiples:

- Stabilisation de la dégradation des cellules à moins de 1% / 1 000 h de fonctionnement sur ces unités pour des densités de courant de l'ordre de 0,20-0,30 A/cm$^2$ , des températures comprises entre 750 et 800 °C et des pressions d'oxygène comprises entre 1 et 20 bars,,

- les conditions de fonctionnement des unités, par rapport aux systèmes "classiques" membrane céramique sans couche d'accrochage et avec couche protectrice, sont plus sévères en terme de productivité (x 1,5-2) et de température avec des dégradations (augmentation des potentiels de cellule) nettement plus faibles,
- Le maintien de la productivité (rendement faradique) sous 10 bars d'oxygène,
- La pureté de l'oxygène produit est de type N60, c'est à dire avec un taux d'impuretés des gaz de l'air (azote, ...) inférieur à 100 ppb.

A titre d'exemples supplémentaires conduisant aux résultats avantageux décrits ci-dessus, il y a les cellules électrochimiques dans lesquelles :

- la couche d'accrochage développée sur les deux faces de l'électrolyte solide dense est constituée du même matériau que ce dernier. Il peut toutefois s'agir d'autres matériaux constituants la cellule, principalement de même nature que l'électrode. De manière générale il peut également s'agir de matériaux de structure cristalline conductrices ioniques (électrolyte solide dense : phases d'Aurivillius, fluorite) et/ou mixtes (phases brown-millerite, pérovskite, pyrochlore) ;
- la couche d'accrochage est caractérisée par le fait qu'elle peut être, si elle est de même nature que l'électrolyte solide dense, indissociable de ce dernier. La membrane céramique est caractérisée alors par une membrane possédant sur ses faces de part et d'autre une surface spécifique/rugosité. L'obtention de cette surface d'accrochage peut être obtenue soit à partir, après frittage, d'une membrane céramique, par pressage isostatique par exemple, soit à partir d'une membrane pré-frittée, soit à partir d'une membrane en cru;
- la couche intermédiaire est définie comme étant constituée de matériaux issus des dépôts sous et sus-jacents. Le coefficient d'expansion thermique de cette couche est inférieur à la couche sus-jacente et supérieur à la couche sous-jacente. La couche d'accrochage peut être définie comme étant une couche intermédiaire entre l'électrolyte solide et l'électrode. La couche intermédiaire doit être suffisamment poreuse et d'épaisseur contrôlée et ne pas influencer les performances électrochimiques de la cellule. Elle est constituée soit de matériaux conducteurs ioniques, soit de matériaux conducteurs mixtes, soit de matériaux conducteurs électroniques, soit d'un mélange des matériaux pré cités;
- la couche protectrice est constituée d'une pérovskite de type LSCoFe ou autre, possédant des propriétés de conductivité mixte à basse température (<800°C). Il peut également s'agir d'autres structures cristallines conductrices ioniques ou mixtes (phases dites d'Aurivillius, brown-millerite, pyrochlore, fluorite) ;
- la couche protectrice ne possède pas de propriétés de conduction mixte, ionique ou électronique. Il peut s'agir d'un isolant. La couche doit cependant être suffisamment poreuse et d'épaisseur contrôlée pour permettre la diffusion de l'oxygène au sein du système et ne pas influer sur les performances électrochimiques de la cellule ;
- des billes de mullite ou de zircone ou d'alumine (diamètre compris entre 0.2 et 1 mm) peuvent remplir le Cellule de manière à fixer mécaniquement le fil d'argent interne. Ces billes peuvent éventuellement être recouvertes d'une couche collecteur de courant, de même nature que la couche collecteur de courant déposée sur le système tubulaire (laque d'argent, mélange Argent/LSM (50/50, % vol.), laque d'or, ...). L'emploi de billes de type pérovskite peut également être envisagé, soit de même composition chimique que la couche protectrice, soit de composition chimique différente.

**Revendications**

1.  Membrane céramique conductrice par ions oxyde, **caractérisée en ce qu'**elle comprend un volume fini non nul d'épaisseur totale non nulle E, comprenant :

    a) une couche dense (CD) d'un électrolyte solide ayant, à la température d'électrolyse, une structure cristalline conductrice par ions oxyde, d'épaisseur non nulle $e_0$ et de surfaces externes opposées $S_0$ et $S'_0$ identiques ou différentes,
    b) une couche dite d'accrochage (CA), possédant, soit une structure cristalline conductrice par ions oxyde, soit une structure cristalline conductrice mixte, soit un mélange des deux structures cristallines précitées, plaquée sur la surface $S_0$ de la couche dense (CD), ayant une épaisseur $e_1$ non nulle, une surface externe $S_1$, une surface spécifique $s_{1\omega}$ et une rugosité $R_1$,
    c) de deux électrodes poreuses (EP) et (EP'), conductrices mixtes, de compositions chimiques identiques ou différentes, plaquées, l'une sur la surface $S_1$ de (CA) et l'autre sur la surface $S'_0$ de (CD), lesdites électrodes ayant respectivement des surfaces externes $S_2$ et $S'_2$ non nulles, identiques ou différentes et des épaisseurs non nulles $e_2$, et $e'_2$, identiques ou différentes, et

d) de deux collecteurs de courant poreux (CC) et (CC'), de compositions chimiques identiques ou différentes, plaqués sur les surfaces $S_2$ et $S'_2$ de (EP) et (EP'), lesdits collecteurs de courant (CC) et (CC'), ayant respectivement des surfaces externe $S_3$ et $S_3'$ non nulles, identiques ou différentes et des épaisseurs non nulles, $e_3$ et $e'_3$, identiques ou différentes,

e) d'au moins une couche poreuse de revêtement (ER) constituée d'un matériau ou d'un mélange de matériaux, chimiquement compatible avec les matériaux, ou les mélanges de matériaux, desdits électrodes, collecteurs de courant et électrolyte solide, dont la température de frittage est très proche des températures de frittage des matériaux, ou des mélanges de matériaux constituant lesdits électrodes, collecteurs de courant, couche d'accrochage et électrolyte solide, ladite couche (ER) étant plaquée <u>soit</u> sur la surface $S_3$ de (CC), <u>soit</u> sur la surface $S_3'$ de (CC'), ladite couche de revêtement ayant une surface $S_4$, et une épaisseur $e_4$ non nulle,

et **caractérisée en ce que** l'épaisseur E du volume de ladite membrane, est égale à la somme des épaisseurs de chacun des éléments cités.

2. Membrane telle que définie à la revendication 1, dans laquelle le volume fini d'épaisseur E, comprend une deuxième couche d'accrochage (CA'), possédant, <u>soit</u> une structure cristalline conductrice par ions oxyde, <u>soit</u> une structure cristalline conductrice mixte, <u>soit</u> un mélange des deux structures cristallines précitées, plaquée sur la surface $S'_0$ de la couche dense (CD), et sur la surface externe $S'_1$ de laquelle, est plaquée l'électrode (EP'), ladite couche (CA') ayant une épaisseur $e'_1$ non nulle, une surface spécifique $s'_{1\omega}$ et une rugosité $R'_1$,

3. Membrane telle que définie à l'une des revendications 1 ou 2, dans laquelle le volume fini d'épaisseur E, comprend une deuxième couche poreuse de revêtement (ER') constituée d'un matériau ou d'un mélange de matériaux, chimiquement compatibles avec les matériaux ou les mélanges de matériaux, desdits électrodes, collecteurs de courant, couches d'accrochage et électrolyte solide, dont la température de frittage est très proche des températures de frittage des matériaux ou des mélanges de matériaux constituant lesdits électrodes, collecteurs de courant et électrolyte solide, ladite couche (ER') étant plaquée sur celle des surfaces $S'_3$ de (CC') ou $S_3$ de (CC) qui n'est pas revêtue de la couche (ER), ladite couche (ER') ayant une surface $S'_4$, et une épaisseur $e'_4$ non nulle.

4. Membrane telle que définie à l'une des revendications 1 à 3, dans laquelle le volume fini d'épaisseur E, comprend en outre une couche intermédiaire (CI$_{23}$) constituée de matériaux issus de l'électrode (EP) et du collecteur de courant (CC), ladite couche (CI$_{23}$) ayant un coefficient d'expansion thermique (CET$_{23}$) de valeur comprise entre celui, CET$_2$, de (EP) et celui, CET$_3$, de (CC) et de préférence supérieur au CET$_2$ et inférieur à CET$_3$, plaquée sur la surface $S_2$ de (EP) et sur la surface externe $S_{23}$ de laquelle, est plaqué le collecteur (CC), ladite couche CI$_{23}$ ayant une épaisseur $e_{23}$ non nulle, une surface spécifique $S_{23\omega}$ et une rugosité $R_{23}$.

5. Membrane telle que définie à l'une quelconque des revendications 1 à 4, dans laquelle le volume fini d'épaisseur E, comprend en outre une deuxième couche intermédiaire (CI'$_{23}$) constituée de matériaux issus de l'électrode (EP') et du collecteur de courant (CC'), ladite couche (CI'$_{23}$) ayant un coefficient d'expansion thermique (CET'$_{23}$) de valeur comprise entre celui, CET'$_2$, de (EP') et celui, CET'$_3$, de (CC') et de préférence supérieur au CET'$_2$ et inférieur à CET'$_3$, plaquée sur la surface $S'_2$ de (EP') et sur la surface externe $S'_{23}$ de laquelle, est plaqué le collecteur (CC'), ladite couche CI'$_{23}$ ayant une épaisseur $e'_{23}$ non nulle, une surface spécifique $S'_{23\omega}$ et une rugosité $R'_{23}$.

6. Membrane telle que définie à l'une quelconque des revendications 1 à 5, dans laquelle le volume fini d'épaisseur E, comprend en outre une couche intermédiaire (CI$_{34}$) constituée de matériaux issus du collecteur de courant (CC) et de la couche de revêtement (ER), ladite couche (CI$_{34}$) ayant un coefficient d'expansion thermique (CET$_{34}$) de valeur comprise entre celui, CET$_3$, de (CC) et celui, CET$_4$, de (ER) et de préférence supérieur au CET$_3$ et inférieur à CET$_4$, plaquée sur la surface $S_3$ de (CC) et sur la surface externe $S_{34}$ de laquelle, est plaquée la couche de revêtement (ER), ladite couche CI$_{34}$ ayant une épaisseur $e_{34}$ non nulle, une surface spécifique $S_{34\omega}$ et une rugosité $R_{34}$.

7. Membrane telle que définie à l'une quelconque des revendications 3 à 6, dans laquelle le volume fini d'épaisseur E, comprend en outre une deuxième couche intermédiaire (CI'$_{34}$) constituée de matériaux issus du collecteur de courant (CC') et de la couche de revêtement (ER'), ladite couche (CI'$_{34}$) ayant un coefficient d'expansion thermique (CET'$_{34}$) de valeur comprise entre celui, CET'$_3$, de (EP') et celui, CET'$_4$, de (ER') et de préférence supérieur au CET'$_3$ et inférieur à CET'$_4$, plaquée sur la surface $S'_3$ de (CC') et sur la surface externe $S'_{34}$ de laquelle, est plaquée la couche de revêtement (ER'), ladite couche CI'$_{34}$ ayant une épaisseur $e'_{34}$ non nulle, une surface spécifique $s'_{34\omega}$ et une rugosité $R'_{34}$.

8. Membrane céramique, telle que définie à l'une quelconque des revendications 1 à 7, **caractérisée en ce que** $e_2 = e'_2$.

9. Membrane céramique, telle que définie à l'une quelconque des revendications 1 à 8, **caractérisée en ce que** $e_3 = e'_3$.

10. Membrane céramique, telle que définie à l'une quelconque des revendications 2 à 9, **caractérisée en ce que** $e_1 = e'_1$.

11. Membrane céramique, telle que définie à l'une quelconque des revendications 5 à 10, **caractérisée en ce que** $e_{23} = e'_{23}$.

12. Membrane céramique, telle que définie à l'une quelconque des revendications 7 à 11, **caractérisée en ce que** $e_{34} = e'_{34}$.

13. Membrane céramique, telle que définie à l'une quelconque des revendications 3 à 12, **caractérisée en ce que** $e_4 = e'_4$.

14. Membrane céramique, telle que définie à l'une des revendications 1 à 13, **caractérisée en ce que**:

l'épaisseur $e_0$ est comprise entre environ 0,01 mm et environ 2 mm et plus particulièrement entre environ 0,05 mm et environ 1 mm,

les épaisseurs $e_1$ et $e'_1$ sont comprises environ entre 1 $\mu$m et 500 $\mu$m et plus particulièrement entre 10 $\mu$m et 300 $\mu$m,

les épaisseurs $e_2$ et $e'_2$ sont comprises entre environ 1 $\mu$m et environ 500 $\mu$m et plus particulièrement entre environ 10 $\mu$m et environ 300 $\mu$m,

les épaisseurs $e_3$ et $e'_3$ sont comprises entre environ 1 $\mu$m et environ 500 $\mu$m et plus particulièrement entre environ 20 $\mu$m et environ 300 $\mu$m,

les épaisseurs $e_4$ et $e'_4$ sont comprises entre environ 1 $\mu$m et environ 500 $\mu$m et plus particulièrement entre environ 20 $\mu$m et environ 300 $\mu$m,

les épaisseurs $e_{23}$ et $e'_{23}$ sont comprises entre environ entre 1 $\mu$m et environ 500 $\mu$m et plus particulièrement entre environ 10 $\mu$m et environ 300 $\mu$m et,

les épaisseurs $e_{34}$ et $e'_{34}$ sont comprises entre environ entre 1 $\mu$m et 500 $\mu$m et plus particulièrement entre 10 $\mu$m et 300 $\mu$m.

15. Membrane céramique, telle que définie à l'une des revendications 1 à 13, consistant en une plaque de surface plane S et d'épaisseur E et **caractérisée en ce que** chacune des surfaces $S_0$, $S'_0$, $S_1$, $S_2$, $S'_2$, $S_3$, $S'_3$, $S_4$ et le cas échéant, $S'_1$, $S'_4$, $S_{23}$, $S'_{23}$, $S_{34}$ et $S'_{34}$, est égale à S, et consistant de préférence en une plaque de longueur L, comprise entre environ 1 cm et environ 1 m et plus particulièrement, entre 5 cm et environ 50 cm et de largeur l, comprise entre environ 1 cm et environ 1 m et plus particulièrement entre 5 cm et environ 50 cm.

16. Membrane céramique, telle que définie à l'une des revendications 1, à 14, de forme tubulaire, consistant en un cylindre creux ouvert à ses deux extrémités ou seulement à l'une d'entre elles, de diamètre extérieur D et de diamètre intérieur d, **caractérisée en ce que** la couche de support est la couche dense (CD) de l'électrolyte solide, **en ce que** les surfaces $S_0$, $S'_0$, $S_1$, $S_2$, $S'_2$, $S_3$, $S'_3$, $S_4$ et le cas échéant, $S'_1$, $S'_4$, $S_{23}$, $S'_{23}$, $S_{34}$ et $S'_{34}$, sont cylindriques et coaxiales et **en ce que** l'épaisseur E est de la membrane est égale à la moitié de la différence (D - d).

17. Membrane céramique, telle que définie à la revendication 16, de longueur L comprise environ entre 1 cm et environ 1 m et plus particulièrement entre 10 cm et 50 cm.

18. Membrane céramique, telle que définie à l'une des revendications 1 à 17, dans laquelle l'électrolyte solide est représenté par la formule (I) :

$$(M_\alpha O_\beta)_{1-x} (R_\gamma O_\delta)_x \qquad\qquad (I)$$

dans laquelle M représente au moins un atome trivalent ou tétravalent choisi parmi Bi, Ce, Zr, Ga, Th ou Hf, $\alpha$ et $\beta$ sont tels que la structure $M_\alpha O_\beta$ est électriquement neutre, R représente au moins un atome divalent ou trivalent choisi parmi Mg, Ca, Ba, Sr, Gd, Sc, Yb, Y, Sm ou La, $\gamma$ et $\delta$ sont tels que la structure $R_\gamma O_\delta$ est électriquement neutre, x est compris entre 0,05 et 0,30 et plus particulièrement, entre 0,075 et 0,15.

**19.** Membrane céramique, telle que définie à la revendication 18, dans laquelle l'électrolyte solide est un oxyde céramique ou un mélange d'oxydes céramiques, choisi parmi $ZrO_2$, $CeO_2$, $HfO_2$, $ThO_2$, $Ga_2O_3$ ou $Bi_2O_3$, dopé avec un ou plusieurs oxydes choisis parmi $MgO$, $CaO$, $BaO$, $SrO$, $Gd_2O_3$, $Sc_2O_3$, $Yb_2O_3$, $Er_2O_3$, $Y_2O_3$, $Sm_2O_3$, $In_2O_3$, $Nb_2O_3$ et $La_2O_3$.

**20.** Membrane céramique, telle que définie à la revendication 19, dans laquelle l'électrolyte solide est l'oxyde de zirconium stabilisé à l'oxyde d'yttrium de formule (Ia) :

$$(ZrO_2)_{1-x}\,(Y_2O_3)_x \qquad\qquad (Ia)$$

dans laquelle x est compris entre 0,05 et 0,15.

**21.** Membrane céramique, telle que définie aux revendications 1 à 20, dans laquelle les électrodes (EP) et (EP') sont en un matériau ou un mélange de matériau de formule (II) :

$$M_1M_2O_3, \qquad\qquad (II)$$

dans laquelle, $M_1$ représente un ou plusieurs atomes choisis parmi La, Ce, Pr, Nd, Pm, Sm, Eu, Gd, Tb, Dy, Ho, Er, Tm, Yb, Lu, Y, Mg, Ca, Sr ou Ba, $M_2$ représente un ou plusieurs atomes choisis parmi Sc, Ti, V, Cr, Mn, Fe, Co, Ni, Cu ou Zn.

**22.** Membrane céramique, telle que définie à la revendication 21, dans laquelle les électrodes, de compositions identiques ou différentes, sont en un matériau ou en un mélange de matériaux choisis parmi $LaNO_3$, $Ca_uLa_vMnO_w$ $La_u8r_vMnO_w$. $La_uSr_vCoO_w$, $Ca_uLa_vCoO_w$, $Gd_uSr_vCoO_w$, $La_uSr_vCrO_w$, $La_uSr_vFeO_w$ ou $La_uSr_vFe_cCo_dO_w$, dans lesquels $u + v$ et $c + d$ sont égaux à 1 et w est tel que la structure en cause est électriquement neutre.

**23.** Membrane céramique, telle que définie aux revendications 1 à 22, dans laquelle les couches (CA) et CA') sont de composition chimique identique à celle de l'électrolyte solide.

**24.** Membrane céramique, telle que définie à la revendication 23, **caractérisée en ce qu'**elle comprend un volume fini non nul d'épaisseur totale non nulle E, comprenant :

a) une couche d'un électrolyte solide à gradient continu de porosité superficielle contrôlé (CE), ayant, à la température d'électrolyse, une structure cristalline conductrice par ions oxydes, d'épaisseur non nulle $e_0 + e_1 + e'_1$ et de surfaces externes opposées $S_1$ et $S'_1$ identiques, de surface spécifique $s_{1\omega}$ et $s'_{1\omega}$ identiques et de rugosité $R_1$ et $R'_1$ identiques.
b) de deux électrodes poreuses (EP) et (EP'), conductrices mixtes, de compositions chimiques identiques ou différentes, plaquées sur chacune des surface $S_1$ et $S'_1$ de (CE), lesdites électrodes ayant respectivement des surfaces externes $S_2$ et $S'_2$. non nulles, identiques ou différentes et des épaisseurs non nulles $e_2$, et $e'_2$, identiques ou différentes, et
c) de deux collecteurs de courant poreux (CC) et (CC'), de compositions chimiques identiques ou différentes, plaqués sur les surfaces $S_2$ et $S'_2$ de (EP) et (EP'), lesdits collecteurs de courant (CC) et (CC'), ayant respectivement des surfaces externe $S_3$ et $S_3'$ non nulles, identiques ou différentes et des épaisseurs non nulles, $e_3$ et $e'_3$, identiques ou différentes,
d) d'au moins une couche poreuse de revêtement (ER) constituée d'un matériau ou d'un mélange de matériaux, chimiquement compatible avec les matériaux, ou les mélanges de matériaux, desdits électrodes, collecteurs de courant et électrolyte solide à gradient continu de porosité superficielle contrôlé, dont la température de frittage est très proche des températures de frittage des matériaux, ou des mélanges de matériaux constituant lesdits desdits électrodes, collecteurs de courant et électrolyte solide, ladite couche (ER) étant plaquée <u>soit</u> sur la surface $S_3$ de (CC), <u>soit</u> sur la surface $S_3'$ de (CC'), ladite couche de revêtement ayant une surface $\overline{S_4}$, et une épaisseur $e_4$ non nulle,

et **caractérisée en ce que** l'épaisseur E du volume de ladite membrane, est égale à la somme des épaisseurs de chacun des éléments cités.

**25.** Membrane céramique, telle que définie aux revendications 1 à 22, dans laquelle les couches (CA) et (CA') sont de composition chimique identique à celle des électrodes (EP) et (EP').

**26.** Membrane céramique, telle que définie aux revendications 1 à 22, dans laquelle les couches (CA) et CA') sont de composition chimique identique ou différente, consistant en un mélange de composés de formule (Ia) et de formule (II).

**27.** Membrane céramique, telle que définie à l'une des revendications 1 à 25, dans laquelle les collecteurs de courant (CC) et (CC'), sont constitués essentiellement, <u>soit</u> par un métal, <u>soit</u> par une laque de métal et plus particulièrement une laque d'or ou une laque d'argent, <u>soit</u> par un mélange métal / céramique "oxyde inerte", plus particulièrement un mélange métal / alumine, soit par un mélange métal / céramique oxyde "conducteur mixte", et plus particulièrement un mélange métal / matériau pérovskite, <u>soit</u> par un mélange métal / céramique oxyde "conducteur ionique" et plus particulièrement un mélange métal / zircone stabilisée à l'yttrium (8% mol.), <u>soit</u> par un mélange métal / céramique oxyde "conducteur électronique" et plus particulièrement un mélange métal / oxyde de nickel, <u>soit</u> par un mélange métal / carbure et plus particulièrement un mélange métal / carbure de silicium, <u>soit</u> par un mélange métal / nitrure et plus particulièrement un mélange métal / nitrure de silicium, <u>soit</u> par un mélange d'un ou de plusieurs des mélanges définis précédemment.

**28.** Membrane céramique, telle que définie à la revendication 27, dans laquelle les collecteurs de courant (CC) et (CC'), de compositions identiques ou différentes, sont en un mélange d'un métal choisi, <u>soit</u> parmi les métaux de transition, plus particulièrement parmi, l'argent, le cuivre et le nickel, <u>soit</u> parmi les métaux nobles et plus particulièrement parmi l'or, le platine et le palladium avec, <u>ou bien</u> un ou plusieurs composés de formule (I) telle que définie précédemment <u>ou bien</u> avec un ou plusieurs composés de formule (II) telle que définie précédemment.

**29.** Membrane céramique, telle que définie à la revendication 28, dans laquelle les collecteurs de courant (CC) et (CC'), de composition identique, sont <u>soit</u> en un mélange d'argent et de zircone dopée à l'oxyde d'yttrium, de préférence YSZ(8%), <u>soit</u> en un mélange d'argent avec un ou plusieurs composés de formule (II), de préférence le manganite de lanthane dopé au strontium (LSM) et tout particulièrement $La_{0,9}Sr_{0,1}MnO_{3-\delta}$, <u>soit</u> en un mélange d'argent, de céramique "conductrice ionique" et de céramique "conductrice mixte" et de préférence le mélange Ag-YSZ(8%)-LSM.

**30.** Membrane céramique, telle que définie à l'une des revendications 1 à 29, dans laquelle les couches de revêtement (ER) et, le cas échéant (ER'), sont isolantes.

**31.** Membrane céramique, telle que définie à l'une des revendications 1 à 29, dans laquelle dans laquelle les couches de revêtement (ER) et, le cas échéant (ER'), sont en des composés ou des mélanges de composés de formule (II) et plus particulièrement en des composés de formule $La_uSr_vCo_dFe_cO_w$, dans lesquels u + v et c + d sont égaux à 1 et w est tel que la structure en cause est électriquement neutre.

**32.** Membrane céramique, telle que définie à la revendications 31, dans laquelle les couches de revêtement (ER) et, le cas échéant (ER'), sont en un composé de formule (IIa) :

$$La_{0,8}Sr_{0,2}Co_{0,8}Fe_{0,2}O_w \qquad\qquad (IIa)$$

dans laquelle w est tel que la structure de formule (IIa), est électriquement neutre.

**33.** Membrane céramique, telle que définie à l'une des revendications 1 à 32, dans laquelle chacun des collecteurs de courant (CC) et (CC'), est relié à la partie extérieure du circuit par un fil conducteur électronique, en un métal identique ou différent à celui que lesdits collecteurs de courant comportent.

**34.** Membrane céramique, telle que définie à l'une des revendications 16 à 33, **caractérisée en ce qu'**elle est remplie de billes de mullite, de zircone, d'alumine ou de pérovskite.

**35.** Utilisation d'une membrane céramique, telle que définie à l'une quelconque des revendications 1 à 34, pour séparer l'oxygène de l'air ou d'un mélange gazeux, le contenant.

**36.** Utilisation d'une membrane céramique, telle que définie à l'une quelconque des revendications 1 à 34, pour produire de l'oxygène ultra - pur sous pression.

37. Utilisation d'une membrane céramique, telle que définie à l'une quelconque des revendications 1 à 34, pour analyser la présence d'oxygène dans une atmosphère gazeuse.

38. Procédé de préparation d'oxygène ultra - pur consistant en la séparation de l'oxygène de l'air par conduction ionique à travers une cellule électrochimique, telle que définie à l'une quelconque des revendications 1 à 34.

39. Procédé d'élimination de l'oxygène d'une atmosphère gazeuse dans laquelle sont effectuées des applications nécessitant des atmosphères à faible teneur en oxygène ou sans oxygène, consistant en la séparation de l'oxygène de ladite atmosphère, par conduction ionique à travers une membrane, telle que définie à l'une quelconque des revendications 14 ou 15 et 18 à 33.

40. Procédé de production d'énergie thermique et électrique au sein d'une pile à combustible solide, par réaction de l'oxygène et de l'hydrogène, **caractérisé en ce que** ledit oxygène est obtenu en le séparant de l'air à travers une membrane céramique, telle que définie à l'une quelconque des revendications 1 à 34.

## Claims

1. Ceramic membrane conducting by oxide ions, **characterized in that** it comprises a non-zero finished volume of non-zero total thickness T, comprising:

   a) a dense layer (DL) of a solid electrolyte having, at the electrolysis temperature, a crystal structure conducting by oxide ions, of non-zero thickness to and of opposed external surfaces $S_0$ and $S'_0$ that are identical or different;
   b) a layer called the tie layer (TL) that possesses either a crystal structure conducting by oxide ions or a hybrid conducting crystal structure or a mixture of the two aforementioned crystal structures, the said tie layer being pressed against the surface $S_0$ of the dense layer (DL), having a non-zero thickness $t_1$, an external surface $S_1$, a specific surface area $s_{1\omega}$ and a roughness $R_1$;
   c) two porous electrodes (PE) and (PE') that are hybrid conductors, of identical or different chemical compositions, pressed one against the surface $S_1$ of (TL) and the other against the surface $S'_0$ of (DL), the said electrodes having respectively, external surfaces $S_2$ and $S'_2$ of non-zero area, that are identical or different, and non-zero thicknesses $t_2$ and $t'_2$, that are identical or different; and
   d) two porous current collectors (CC) and (CC'), of identical or different chemical compositions, pressed against the surfaces $S_2$ and $S'_2$ of (PE) and (PE'), the said current collectors (CC) and (CC') having external surfaces $S_3$ and $S_3'$ of non-zero area, that are identical or different, and non-zero thicknesses $t_3$ and $t'_3$, that are identical or different, respectively;
   e) at least one porous covering layer (CL) formed from a material or a mixture of materials chemically compatible with the materials, or mixtures of materials, of the said electrodes, current collectors and solid electrolyte, the sintering temperature of which is very close to the sintering temperatures of the constituent materials, or mixtures of materials, of the said electrodes, current collectors, tie layer and solid electrolyte, the said layer (CL) being pressed either against the surface $S_3$ of (CC) or against the surface $S_3'$ of (CC'), the said covering layer having a surface $S_4$ and a non-zero thickness $t_4$;

   and **characterized in that** the thickness T of the volume of the said membrane is equal to the sum of the thicknesses of each of the elements mentioned.

2. Membrane as defined in Claim 1, in which the finished volume of thickness T includes a second tie layer (TL') possessing either a crystal structure conducting by oxide ions or a hybrid conducting crystal structure or a mixture of the two aforementioned crystal structures, the said second tie layer being pressed against the surface $S'_0$ of the dense layer (DL), and against the external surface $S'_1$ of which the electrode (PE') is pressed, the said layer (TL') having a non-zero thickness $t'_1$, a specific surface area $s'_{1\omega}$ and a roughness $R'_1$.

3. Membrane as defined in either of Claims 1 and 2, in which the finished volume of thickness T includes a second porous covering layer (CL') made of a material or a mixture of materials that are chemically compatible with the materials or mixtures of materials of the said electrodes, current collectors, tie layers and solid electrolyte, the sintering temperature of which is very close to the sintering temperatures of the constituent materials or mixtures of materials of the said electrodes, current collectors and solid electrolyte, the said layer (CL) being pressed against that one of the surfaces $S'_3$ of (CC') or $S_3$ of (CC) that is not coated with the layer (CL), the said layer (CL') having a surface $S'_4$ and a non-zero thickness $t'_4$.

4. Membrane as defined in one of Claims 1 to 3, in which the finished volume of thickness T furthermore includes an intermediate layer ($IL_{23}$) made of materials coming from the electrode (PE) and from the current collector (CC), the said layer ($IL_{23}$) having a thermal expansion coefficient ($TEC_{23}$) of between that, $TEC_2$, of (PE) and that, $TEC_3$, of (CC) and preferably greater than the $TEC_2$ and less than $TEC_3$, and being pressed against the surface $S_2$ of (PE), and against the external surface $S_{23}$ of which the collector (CC) is pressed, the said layer $IL_{23}$ having a non-zero thickness $t_{23}$, a specific surface area $s_{23\omega}$ and a roughness $R_{23}$.

5. Membrane as defined in any one of Claims 1 to 4, in which the finished volume of thickness T furthermore includes a second intermediate layer ($IL'_{23}$) made of materials coming from the electrode (PE') and from the current collector (CC'), the said layer ($IL'_{23}$) having a thermal expansion coefficient ($TEC'_{23}$) of between that, $TEC'_2$, of (PE') and that, $TEC'_3$, of (CC') and preferably greater than the $TEC'_2$ and less than $TEC'_3$, and being pressed against the surface $S'_2$ of (PE'), and against the external surface $S'_{23}$ of which the collector (CC') is pressed, the said layer $IL'_{23}$ having a non-zero thickness $t'_{23}$, a specific surface area $s'_{23\omega}$ and a roughness $R'_{23}$.

6. Membrane as defined in any one of Claims 1 to 5, in which the finished volume of thickness T furthermore includes an intermediate layer ($IL_{34}$) made of materials coming from the current collector (CC), and from the covering layer (CL), the said layer ($IL_{34}$) having a thermal expansion coefficient ($TEC_{34}$) of between that, $TEC_3$, of (CC) and that, $TEC_4$, of (CL) and preferably greater than the $TEC_3$ and less than $TEC_4$, and being pressed against the surface $S_3$ of (CL), and against the external surface $S_{34}$ of which the covering layer (CL) is pressed, the said layer $IL_{34}$ having a non-zero thickness $t_{34}$, a specific surface area $s_{34\omega}$ and a roughness $R_{34}$.

7. Membrane as defined in any one of Claims 3 to 6, in which the finished volume of thickness T furthermore includes a second intermediate layer ($IL'_{34}$) made of materials coming from the current collector (CC'), and from the covering layer (CL'), the said layer ($IL'_{34}$) having a thermal expansion coefficient ($TEC'_{34}$) of between that, $TEC'_3$, of (PE') and that, $TEC'_4$, of (CL') and preferably greater than the $TEC'_3$ and less than $TEC'_4$, and being pressed against the surface $S'_3$ of (CC'), and against the external surface $S'_{34}$ of which the covering layer (CL') is pressed, the said layer $IL'_{34}$ having a non-zero thickness $t'_{34}$, a specific surface area $s'_{34\omega}$ and a roughness $R'_{34}$.

8. Ceramic membrane as defined in any one of Claims 1 to 7, **characterized in that** $t_2 = t'_2$.

9. Ceramic membrane as defined in any one of Claims 1 to 8, **characterized in that** $t_3 = t'_3$.

10. Ceramic membrane as defined in any one of Claims 2 to 9, **characterized in that** $t_1 = t'_1$.

11. Ceramic membrane as defined in any one of Claims 5 to 10, **characterized in that** $t_{23} = t'_{23}$.

12. Ceramic membrane as defined in any one of Claims 7 to 11, **characterized in that** $t_{34} = t'_{34}$.

13. Ceramic membrane as defined in any one of Claims 3 to 12, **characterized in that** $t_4 = t'_4$.

14. Ceramic membrane as defined in one of Claims 1 to 13, **characterized in that**:

the thickness to is between about 0.01 mm and about 2 mm and more particularly between about 0.05 mm and about 1 mm;
the thicknesses $t_1$ and $t'_1$ are between about 1 $\mu$m and 500 $\mu$m and more particularly between 10 $\mu$m and 300 $\mu$m;
the thicknesses $t_2$ and $t'_2$ are between about 1 $\mu$m and about 500 $\mu$m and more particularly between about 10 $\mu$m and about 300 $\mu$m;
the thicknesses $t_3$ and $t'_3$ are between about 1 $\mu$m and about 500 $\mu$m and more particularly between about 20 $\mu$m and about 300 $\mu$m
the thicknesses $t_4$ and $t'_4$ are between about 1 $\mu$m and about 500 $\mu$m and more particularly between about 20 $\mu$m and about 300 $\mu$m;
the thicknesses $t_{23}$ and $t'_{23}$ are between about 1 $\mu$m and about 500 $\mu$m and more particularly between about 10 $\mu$m and about 300 $\mu$m; and
the thicknesses $t_{34}$ and $t'_{34}$ are between about 1 $\mu$m and 500 $\mu$m and more particularly between 10 $\mu$m and 300 $\mu$m.

**15.** Ceramic membrane as defined in one of Claims 1 to 13, consisting of a plate of plane area S and thickness T and **characterized in that** each area of the surfaces $S_0$, $S'_0$, $S_1$, $S_2$, $S'_2$, $S_3$, $S'_3$, $S_4$ and, where appropriate, $S'_1$, $S'_4$, $S_{23}$, $S'_{23}$, $S_{34}$ and $S'_{34}$, is equal to the area of S, and preferably consisting of a plate of length L between about 1 cm and about 1 m, and more particularly between 5 cm and about 50 cm, and of width w between about 1 cm and about 1 m, and more particularly between 5 cm and about 50 cm.

**16.** Ceramic membrane as defined in one of Claims 1 to 14, of tubular shape, consisting of a hollow cylinder open at both its ends or at only one of them, of outside diameter D and inside diameter d, **characterized in that** the support layer is the dense layer (DL) of the solid electrolyte, **in that** the surfaces $S_0$, $S'_0$, $S_1$, $S_2$, $S'_2$, $S_3$, $S'_3$, $S_4$ and, where appropriate $S'_1$, $S'_4$, $S_{23}$, $S'_{23}$, $S_{34}$ and $S'_{34}$, are cylindrical and coaxial and **in that** the thickness T is of the membrane is equal to half of the difference (D-d).

**17.** Ceramic membrane as defined in Claim 16, of length L between about 1 cm and about 1 m and more particularly between 10 cm and 50 cm.

**18.** Ceramic membrane as defined in one of Claims 1 to 17, in which the solid electrolyte is represented by formula (I):

$$(M_\alpha O_\beta)_{1-x} \ (R_\gamma O_\delta)_x \qquad (I)$$

in which M represents at least one trivalent or tetravelent atom chosen from Bi, Ce, Zr, Ga, Th or Hf, $\alpha$ and $\beta$ are such that the structure $M_\alpha O_\beta$ is electrically neutral, R represents at least one divalent or trivalent atom chosen from Mg, Ca, Ba, Sr, Gd, Sc, Yb, Y, Sm or La, $\gamma$ and $\delta$ are such that the structure $R_\gamma O_\delta$ is electrically neutral and x is between 0.05 and 0.30 and more particularly between 0.075 and 0.15.

**19.** Ceramic membrane as defined in Claim 18, in which the solid electrolyte is a ceramic oxide or a mixture of ceramic oxides chosen from $ZrO_2$, $CeO_2$, $HfO_2$, $ThO_2$, $Ga_2O_3$ or $Bi_2O_3$, doped with one or more oxides chosen from MgO, CaO, BaO, SrO, $Gd_2O_3$, $Sc_2O_3$, $Yb_2O_3$, $Er_2O_3$, $Y_2O_3$, $Sm_2O_3$ , $In_2O_3$, $Nb_2O_3$ and $La_2O_3$.

**20.** Ceramic membrane as defined in Claim 19, in which the solid electrolyte is yttrium-oxide-stabilized zirconium oxide of formula (Ia):

$$(ZrO_2)_{1-x} \ (Y_2O_3)_x \qquad (Ia)$$

in which x is between 0.05 and 0.15.

**21.** Ceramic membrane as defined in Claims 1 to 20, in which the electrodes (PE) and (PE') are made of a material or a mixture of materials of formula (II):

$$M_1 M_2 O_3 \qquad (II)$$

in which $M_1$ represents one or more atoms chosen from La, Ce, Pr, Nd, Pm, Sm, Eu, Gd, Tb, Dy, Ho, Er, Tm, Yb, Lu, Y, Mg, Ca, Sr and Ba, and $M_2$ represents one or more atoms chosen from Sc, Ti, V, Cr, Mn, Fe, Co, Ni, Cu and Zn.

**22.** Ceramic membrane as defined in Claim 21, in which the electrodes, of identical or different compositions, are made of a material or a mixture of materials chosen from $LaNiO_3$, $Ca_u La_v MnO_w$, $La_u Sr_v MnO_w$, $La_u Sr_v CoO_w$, $Ca_u La_v CoO_w$, $Gd_u Sr_v CoO_w$, $La_u Sr_v CrO_w$, $La_u Sr_v FeO_w$ or $La_u Sr_v Fe_c CO_d O_w$, in which u + v and c + d are equal to 1 and w is such that the structure in question is electrically neutral.

**23.** Ceramic membrane as defined in Claims 1 to 22, in which the layers (TL) and (TL') are of identical chemical composition to that of the solid electrolyte.

**24.** Ceramic membrane as defined in Claim 23, **characterized in that** it comprises a non-zero finished volume of non-zero total thickness T, comprising:

a) a layer of a solid electrolyte with a continuous controlled surface porosity gradient (CE) having, at the electrolysis temperature, a crystal structure conducting by oxide ions, with a non-zero thickness $t_0 + t_1 + t'_1$ and of opposed external surfaces $S_1$ and $S'_1$ of identical area, identical specific surface area $s_{1\omega}$ and $s'_{1\omega}$ and identical roughness $R_1$ and $R'_1$;

b) two hybrid conducting porous electrodes (PE) and (PE'), of identical or different chemical compositions, pressed against each of the surfaces $S_1$ and $S'_1$ of (CE), the said electrodes having external surfaces $S_2$ and $S'_2$ of identical or different non-zero areas and identical or different non-zero thicknesses $t_2$ and $t'_2$, respectively; and

c) two porous current collectors (CC) and (CC'), of identical or different chemical compositions, pressed against the surfaces $S_2$ and $S'_2$ of (PE) and (PE'), the said current collectors (CC) and (CC') having external surfaces $S_3$ and $S_3'$ of identical or different non-zero areas and identical or different non-zero thicknesses $t_3$ and $t'_3$, respectively;

d) at least one porous covering layer (CL) made of a material, or a mixture of materials, chemically compatible with the materials or the mixtures of materials of the said electrodes, current collectors and solid electrolyte with a continuous controlled surface porosity gradient, the sintering temperature of which is very close to the sintering temperatures of the constituent materials, or mixtures of materials, of the said electrodes, current collectors and solid electrolyte, the said layer (CL) being pressed either against the surface $S_3$ of (CC) or against the surface $S_3'$ of (CC'), the said covering layer having a surface $S_4$ and a non-zero thickness $t_4$;

and **characterized in that** the thickness T of the volume of the said membrane is equal to the sum of the thicknesses of each of the layers mentioned.

25. Ceramic membrane as defined in Claims 1 to 22, in which the layers (TL) and (TL') are of identical chemical composition to that of the electrodes (PE) and (PE').

26. Ceramic membrane as defined in Claims 1 to 22, in which the layers (TL) and (TL') are of identical or different chemical composition, consisting of a mixture of compounds of formula (Ia) and of formula (II).

27. Ceramic membrane as defined in one of Claims 1 to 25, in which the current collectors (CC) and (CC') consist essentially either of a metal or of a metal lacquer and more particularly a gold lacquer or a silver lacquer, or of a metal/"inert oxide" ceramic mixture, more particularly a metal/alumina mixture, or of a metal/"hybrid conductor" oxide ceramic mixture and more particularly a metal/perovskite material mixture, or of a metal/"ionic conductor" oxide ceramic mixture and more particularly a metal/yttrium (8 mol%)-stabilized zirconia mixture or of a metal/"electronic conductor" oxide ceramic mixture and more particularly a metal/nickel oxide mixture, or of a metal/carbide mixture, and more particularly a metal/silicon carbide mixture, or of a metal/nitride mixture and more particularly a metal/ silicon nitride mixture, or of a mixture of one or more of the mixtures defined above.

28. Ceramic membrane as defined in Claim 27, in which the current collectors (CC) and (CC'), of identical or different compositions, are a mixture of a metal chosen either from transition metals, more particularly from silver, copper and nickel, or from noble metals and more particularly from gold, platinum and palladium with either one or more compounds of formula (I) as defined above or with one or more compounds of formula (II) as defined above.

29. Ceramic membrane as defined in Claim 28, in which the current collectors (CC) and (CC'), of identical composition, are either made of a mixture of silver and yttrium-oxide-doped zirconia, preferably (8%) YSZ, or a mixture of silver with one or more compounds of formula (II), preferably strontium-doped lanthanum manganite (LSM) and most particularly $La_{0.9}Sr_{0.1}MnO_{3-\delta}$, or of a silver/"ionic conductor" ceramic/"hybrid conductor" ceramic mixture and preferably the mixture Ag/(8%)YSZ/LSM.

30. Ceramic membrane as defined in one of Claims 1 to 29, in which the covering layers (CL), and where appropriate (CL'), are insulating.

31. Ceramic membrane as defined in one of Claims 1 to 29, in which the covering layers (CL), and where appropriate (CL'), are made of compounds or mixtures of compounds of formula (II) and more particularly of compounds of formula $La_uSr_vCO_dFe_cO_w$ in which u + v and c + d are equal to 1 and w is such that the structure in question is electrically neutral.

32. Ceramic membrane as defined in Claim 31, in which the covering layers (CL) and, where appropriate (CL') are made of a compound of formula (IIa):

$$La_{0.8}Sr_{0.2}Co_{0.8}Fe_{0.2}O_w \qquad (IIa)$$

in which w is such that the structure of formula (IIa) is electrically neutral.

33. Ceramic membrane as defined in one of Claims 1 to 32, in which each of the current collectors (CC) and (CC') is connected to the external part of the circuit via an electronically conducting wire made of a metal identical to or different from that of which the said current collectors are composed.

34. Ceramic membrane as defined in one of Claims 16 to 33, **characterized in that** it is filled beads of mullite, zirconia, alumina or perovskite.

35. Use of a ceramic membrane, as defined in any one of Claims 1 to 34, for separating oxygen from air or from a gas mixture containing it.

36. Use of a ceramic membrane, as defined in any one of Claims 1 to 34, for producing ultrapure oxygen under pressure.

37. Use of a ceramic membrane, as defined in any one of Claims 1 to 34, for analysing for the presence of oxygen in a gaseous atmosphere.

38. Process for preparing ultrapure oxygen, consisting in separating oxygen from air by ionic conduction through an electrochemical cell as defined in any one of Claims 1 to 34.

39. Process for eliminating oxygen from a gaseous atmosphere in which applications requiring atmospheres having a low oxygen content or containing no oxygen are carried out, consisting in separating oxygen from the said atmosphere by ionic conduction through a membrane as defined in any one of Claims 14 or 15 and 18 to 33.

40. Process for producing thermal and electrical energy within a solid fuel cell by reaction of oxygen and hydrogen, **characterized in that** the said oxygen is obtained by being separated from the air through a ceramic membrane as defined in any one of Claims 1 to 34.


**Patentansprüche**

1. Oxidionen leitende keramische Membran, **dadurch gekennzeichnet, dass** sie ein von Null verschiedenes begrenztes Volumen mit einer von Null verschiedenen Gesamtdicke E aufweist, die Folgendes aufweist:

a) eine dichte Schicht (CD) aus einem Festelektrolyten, der bei der Elektrolysetemperatur eine Oxidionen leitende Kristallstruktur aufweist, mit einer von Null verschiedenen Dicke $e_0$ und gegenüberliegenden völlig gleichen oder verschiedenen Außenflächen $S_0$ und $S'_0$,
b) eine so genannte Haftschicht (CA), die <u>entweder</u> eine Oxidionen leitende Kristallstruktur <u>oder</u> eine gemischt leitende Kristallstruktur <u>oder</u> ein Gemisch aus den beiden vorgenannten Kristallstrukturen aufweist, die auf die Fläche $S_0$ der dichten Schicht (CD) aufgebracht ist, mit einer von Null verschiedenen Dicke $e_1$, einer Außenfläche $S_1$, einer spezifischen Oberfläche $S_{1\omega}$ und einer Rauheit $R_1$,
c) zwei poröse Elektroden (EP) und (EP'), die gemischt leitend sind, mit völlig gleicher oder unterschiedlicher chemischer Zusammensetzung, wobei eine auf die Fläche $S_1$ von (CA) und die andere auf die Fläche $S'_0$ von (CD) aufgebracht ist, wobei die Elektroden die von Null verschiedene völlig gleiche oder unterschiedliche Außenfläche $S_2$ beziehungsweise $S'_2$ und die von Null verschiedene völlig gleiche oder unterschiedliche Dicke $e_2$ beziehungsweise $e'_2$ aufweisen, und
d) zwei poröse Stromsammler (CC) und (CC') mit völlig gleicher oder unterschiedlicher chemischer Zusammensetzung, die auf die Flächen $S_2$ und $S'_2$ von (EP) und (EP') aufgebracht sind, wobei die Stromsammler (CC) und (CC') die von Null verschiedene völlig gleiche oder unterschiedliche Außenfläche $S_3$ beziehungsweise $S'_3$ und die von Null verschiedene völlig gleiche oder unterschiedliche Dicke $e_3$ beziehungsweise $e'_3$ aufweisen,
e) mindestens einen porösen Überzug (ER), der aus einem Material oder einer Materialmischung besteht, das oder die chemisch kompatibel mit den Materialien oder Materialmischungen der Elektroden, der Stromsammler und des Festelektrolyten ist, dessen Sintertemperatur den Sintertemperaturen der Materialien oder Materialmischungen sehr ähnelt, aus denen die Elektroden, Stromsammler, die Haftschicht und der Festelektrolyt besteht beziehungsweise bestehen, wobei der Überzug (ER) <u>entweder</u> auf die Fläche $S_3$ von (CC) <u>oder</u> auf die Fläche $S'_3$ von (CC') aufgebracht ist, wobei der Überzug eine Fläche $S_4$ und eine von Null verschiedene Dicke $e_4$ aufweist,

und **dadurch gekennzeichnet, dass** die Dicke E des Volumens der Membran gleich der Summe der Dicken jeder der genannten Elemente ist.

2. Membran nach Anspruch 1, wobei das begrenzte Volumen mit der Dicke E eine zweite Haftschicht (CA') aufweist, die <u>entweder</u> eine Oxidionen leitende Kristallstruktur <u>oder</u> eine gemischt leitende Kristallstruktur <u>oder</u> ein Gemisch aus den beiden vorgenannten Kristallstrukturen aufweist, die auf die Fläche $S'_0$ der dichten Schicht (CD) aufgebracht ist und auf deren Außenfläche $S'_1$ die Elektrode (EP') aufgebracht ist, wobei die Schicht (CA') eine von Null verschiedene Dicke $e'_1$, eine spezifische Oberfläche $s'_{1\omega}$ und eine Rauheit $R'_1$ aufweist.

3. Membran nach einem der Ansprüche 1 oder 2, wobei das begrenzte Volumen mit der Dicke E einen zweiten porösen Überzug (ER') aufweist, der aus einem Material oder einer Materialmischung besteht, das oder die chemisch kompatibel mit den Materialien oder Materialmischungen der Elektroden, der Stromsammler, der Haftschichten und des Festelektrolyten ist, dessen Sintertemperatur den Sintertemperaturen der Materialien oder Materialmischungen sehr ähnelt, aus denen die Elektroden, Stromsammler und der Festelektrolyt besteht beziehungsweise bestehen, wobei der Überzug (ER') von der Fläche $S'_3$ von (CC') oder $S_3$ von (CC)auf diejenige aufgebracht ist, die nicht mit dem Überzug (ER) versehen ist, wobei der Überzug (ER') eine Fläche $S'_4$ und eine von Null verschiedene Dicke $e'_4$ aufweist.

4. Membran nach einem der Ansprüche 1 bis 3, wobei das begrenzte Volumen mit der Dicke E darüber hinaus eine Zwischenschicht ($CI_{23}$) aufweist, die aus Materialien der Elektrode (EP) und des Stromsammlers (CC) besteht, wobei die Schicht ($CI_{23}$) einen Wärmeausdehnungskoeffizienten ($CET_{23}$) mit einem Wert aufweist, der zwischen dem, $CET_2$, von (EP) und dem, $CET_3$, von (CC) liegt und vorzugsweise größer $CET_2$ und kleiner $CET_3$ ist, die auf die Fläche $S_2$ von (EP) aufgebracht ist und auf deren Außenfläche $S_{23}$ der Sammler (CC) aufgebracht ist, wobei die Schicht $CI_{23}$ eine von Null verschiedene Dicke $e_{23}$, eine spezifische Oberfläche $s_{23\omega}$ und eine Rauheit $R_{23}$ aufweist.

5. Membran nach einem der Ansprüche 1 bis 4, wobei das begrenzte Volumen mit der Dicke E darüber hinaus eine zweite Zwischenschicht ($CI'_{23}$) aufweist, die aus Materialien der Elektrode (EP') und des Stromsammlers (CC') besteht, wobei die Schicht ($CI'_{23}$) einen Wärmeausdehnungskoeffizienten ($CET'_{23}$) mit einem Wert aufweist, der zwischen dem, $CET'_2$, von (EP') und dem, $CET'_3$, von (CC') liegt und vorzugsweise größer $CET'_2$ und kleiner $CET'_3$ ist, die auf die Fläche $S'_2$ von (EP') aufgebracht ist und auf deren Außenfläche $S'_{23}$ der Sammler (CC') aufgebracht ist, wobei die Schicht $CI'_{23}$ eine von Null verschiedene Dicke $e'_{23}$, eine spezifische Oberfläche $s'_{23\omega}$ und eine Rauheit $R'_{23}$ aufweist.

6. Membran nach einem der Ansprüche 1 bis 5, wobei das begrenzte Volumen mit der Dicke E darüber hinaus eine Zwischenschicht ($CI_{34}$) aufweist, die aus Materialien des Stromsammlers (CC) und des Überzugs (ER) besteht, wobei die Schicht ($CI_{34}$) einen Wärmeausdehnungskoeffizienten ($CET_{34}$) mit einem Wert aufweist, der zwischen dem, $CET_3$, von (CC) und dem, $CET_4$, von (ER) liegt und vorzugsweise größer $CET_3$ und kleiner $CET_4$ ist, die auf die Fläche $S_3$ von (CC) aufgebracht ist und auf deren Außenfläche $S_{34}$ der Überzug (ER) aufgebracht ist, wobei die Schicht $CI_{34}$ eine von Null verschiedene Dicke $e_{34}$, eine spezifische Oberfläche $S_{34\omega}$ und eine Rauheit $R_{34}$ aufweist.

7. Membran nach einem der Ansprüche 3 bis 6, wobei das begrenzte Volumen mit der Dicke E darüber hinaus eine zweite Zwischenschicht ($CI'_{34}$) aufweist, die aus Materialien des Stromsammlers (CC') und des Überzugs (ER') besteht, wobei die Schicht ($CI'_{34}$) einen Wärmeausdehnungskoeffizienten ($CET'_{34}$) mit einem Wert aufweist, der zwischen dem, $CET'_3$, von (EP') und dem, $CET'_4$, von (ER') liegt und vorzugsweise größer $CET'_3$ und kleiner $CET'_4$ ist, die auf die Fläche $S'_3$ von (CC') aufgebracht ist und auf deren Außenfläche $S'_{34}$ der Überzug (ER') aufgebracht ist, wobei die Schicht $CI'_{34}$ eine von Null verschiedene Dicke $e'_{34}$, eine spezifische Oberfläche $s'_{34\omega}$ und eine Rauheit $R'_{34}$ aufweist.

8. Keramische Membran nach einem der Ansprüche 1 bis 7, **dadurch gekennzeichnet, dass** $e_2 = e'_2$.

9. Keramische Membran nach einem der Ansprüche 1 bis 8, **dadurch gekennzeichnet, dass** $e_3 = e'_3$.

**10.** Keramische Membran nach einem der Ansprüche 2 bis 9, **dadurch gekennzeichnet, dass** $e_1 = e'_1$.

**11.** Keramische Membran nach einem der Ansprüche 5 bis 10, **dadurch gekennzeichnet, dass** $e_{23} = e'_{23}$.

**12.** Keramische Membran nach einem der Ansprüche 7 bis 11, **dadurch gekennzeichnet, dass** $e_{39} = e'_{34}$.

**13.** Keramische Membran nach einem der Ansprüche 3 bis 12, **dadurch gekennzeichnet, dass** $e_4 = e'_4$.

**14.** Keramische Membran nach einem der Ansprüche 1 bis 13, **dadurch gekennzeichnet, dass**:

die Dicke $e_0$ zwischen ungefähr 0,01 mm und ungefähr 2 mm und insbesondere zwischen ungefähr 0,05 mm und ungefähr 1 mm beträgt,
die Dicken $e_1$ und $e'_1$ ungefähr zwischen 1 $\mu$m und 500 $\mu$m und insbesondere zwischen 10 $\mu$m und 300 $\mu$m betragen,
die Dicken $e_2$ und $e'_2$ zwischen ungefähr 1 $\mu$m und ungefähr 500 $\mu$m und insbesondere zwischen ungefähr 10 $\mu$m und ungefähr 300 $\mu$m betragen,
die Dicken $e_3$ und $e'_3$ zwischen ungefähr 1 $\mu$m und ungefähr 500 $\mu$m und insbesondere zwischen ungefähr 20 $\mu$m und ungefähr 300 $\mu$m betragen,
die Dicken $e_4$ und $e'_4$ zwischen ungefähr 1 $\mu$m und ungefähr 500 $\mu$m und insbesondere zwischen ungefähr 20 $\mu$m und ungefähr 300 $\mu$m betragen,
die Dicken $e_{23}$ und $e'_{23}$ zwischen ungefähr 1 $\mu$m und ungefähr 500 $\mu$m und insbesondere zwischen ungefähr 10 $\mu$m und ungefähr 300 $\mu$m betragen und
die Dicken $e_{34}$ und $e'_{34}$ zwischen ungefähr 1 $\mu$m und 500 $\mu$m und insbesondere zwischen 10 $\mu$m und 300 $\mu$m betragen.

**15.** Keramische Membran nach einem der Ansprüche 1 bis 13, die aus einer Platte mit einer ebenen Fläche S und der Dicke E besteht und **dadurch gekennzeichnet ist, dass** jede der Flächen $S_0$, $S'_0$, $S_1$, $S_2$, $S'_2$, $S_3$, $S'_3$, $S_4$ und gegebenenfalls $S'_1$, $S'_4$, $S_{23}$, $S'_{23}$, $S_{34}$ und $S'_{34}$ gleich S ist, und vorzugsweise aus einer Platte mit der Länge L besteht, die zwischen ungefähr 1 cm und ungefähr 1 m beträgt und insbesondere zwischen 5 cm und ungefähr 50 cm, und mit der Breite 1, die zwischen ungefähr 1 cm und ungefähr 1 m beträgt und insbesondere zwischen 5 cm und ungefähr 50 cm.

**16.** Keramische Membran nach einem der Ansprüche 1 bis 14 in Röhrenform, die aus einem Hohlzylinder besteht, der an seinen beiden Enden oder nur an einem davon offen ist, mit einem Außendurchmesser D und einem Innendurchmesser d, **dadurch gekennzeichnet, dass** die Trägerschicht die dichte Schicht (CD) aus dem Festelektrolyten ist, dadurch, dass die Flächen $S_0$, $S'_0$, $S_1$, $S_2$, $S'_2$, $S_3$, $S'_3$, $S_4$ und gegebenenfalls $S'_1$, $S'_4$, $S_{23}$, $S'_{23}$, $S_{34}$ und $S'_{34}$ walzenförmig und koaxial sind und dadurch, dass die Dicke E der Membran gleich der Hälfte des Unterschieds (D-d) ist.

**17.** Keramische Membran nach Anspruch 16 mit der Länge L, die ungefähr zwischen 1 cm und ungefähr 1 m und insbesondere zwischen 10 cm und 50 cm beträgt.

**18.** Keramische Membran nach einem der Ansprüche 1 bis 17, wobei der Festelektrolyt durch die Formel (I) wiedergegeben wird:

$$(M_\alpha O_\beta)_{1-x} \ (R_\gamma O_\delta)_x \qquad (I)$$

wobei M mindestens ein dreiwertiges oder vierwertiges Atom darstellt, das aus Bi, Ce, Zr, Ga, Th oder Hf ausgewählt ist, und $\alpha$ und $\beta$ derart sind, dass die Struktur $M_\alpha O_\beta$ ungeladen ist, R mindestens ein zweiwertiges oder dreiwertiges Atom darstellt, das aus Mg, Ca, Ba, Sr, Gd, Sc, Yb, Y, Sm oder La ausgewählt ist, und $\gamma$ und $\delta$ derart sind, dass die Struktur $R_\gamma O_\delta$ ungeladen ist, und x zwischen 0,05 und 0,30 und insbesondere zwischen 0,075 und 0,15 liegt.

**19.** Keramische Membran nach Anspruch 18, wobei der Festelektrolyt ein keramisches Oxid oder ein Gemisch aus keramischen Oxiden ist, das aus $ZrO_2$, $CeO_2$, $HfO_2$, $ThO_2$, $Ga_2O_3$ oder $Bi_2O_3$ ausgewählt ist und mit einem oder mehreren Oxiden dotiert ist, die aus MgO, CaO, BaO, SrO, $Gd_2O_3$, $SC_2O_3$, $Yb_2O_3$, $Er_2O_3$, $Y_2O_3$, $Sm_2O_3$, $In_2O_3$, $Nb_2O_3$ und $La_2O_3$ ausgewählt sind.

**20.** Keramische Membran nach Anspruch 19, wobei der Festelektrolyt Yttriumoxid-stabilisiertes Zirkonoxid mit der Formel (Ia) ist:

$$(ZrO_2)_{1-x} \ (Y_2O_3)_x \qquad (Ia)$$

wobei x zwischen 0,05 und 0,15 liegt.

**21.** Keramische Membran nach Anspruch 1 bis 20, wobei die Elektroden (EP) und (EP') aus einem Material oder einer Materialmischung der Formel (II) bestehen:

$$M_1M_2O_3 \qquad (II)$$

wobei $M_1$ ein oder mehrere Atome darstellt, die aus La, Ce, Pr, Nd, Pm, Sm, Eu, Gd, Tb, Dy, Ho, Er, Tm, Yb, Lu, Y, Mg, Ca, Sr oder Ba ausgewählt sind, $M_2$ ein oder mehrere Atome darstellt, die aus Sc, Ti, V, Cr, Mn, Fe, Co, Ni, Cu oder Zn ausgewählt sind.

**22.** Keramische Membran nach Anspruch 21, wobei die Elektroden mit völlig gleicher oder unterschiedlicher Zusammensetzung aus einem Material oder einem Gemisch von Materialien bestehen, die aus $LaNiO_3$, $Ca_uLa_vMnO_w$, $La_uSr_vMnO_w$, $La_uSr_vCoO_w$, $Ca_uLa_vCoO_w$, $Gd_uSr_vCoO_w$, $La_uSr_vCrO_w$, $La_uSr_vFeO_w$ oder $La_uSr_vFe_cCo_dO_w$ ausgewählt sind, wobei u + v und c + d gleich 1 sind und w derart ist, dass die betreffende Struktur ungeladen ist.

**23.** Keramische Membran nach Anspruch 1 bis 22, wobei die Schichten (CA) und (CA') dieselbe chemische Zusammensetzung wie die des Festelektrolyten aufweisen.

**24.** Keramische Membran nach Anspruch 23, **dadurch gekennzeichnet, dass** sie ein von Null verschiedenes begrenztes Volumen mit einer von Null verschiedenen Gesamtdicke E aufweist, die Folgendes aufweist:

a) eine Schicht aus einem Festelektrolyten mit einem kontrollierten kontinuierlichen Gradienten der Oberflächenporosität (CE), der bei der Elektrolysetemperatur eine Oxidionen leitende Kristallstruktur aufweist, mit einer von Null verschiedenen Dicke $e_0 + e_1 + e'_1$ und den gegenüberliegenden völlig gleichen Außenflächen $S_1$ und $S'_1$, mit den völlig gleichen spezifischen Oberflächen $S_{1\omega}$ und $S'_{1\omega}$ und den völlig gleichen Rauheiten $R_1$ und $R'_1$,

b) zwei poröse Elektroden (EP) und (EP'), die gemischt leitend sind, mit völlig gleicher oder unterschiedlicher chemischer Zusammensetzung, die auf jede der Flächen $S_1$ und $S'_1$ von (CE) aufgebracht sind, wobei die Elektroden die von Null verschiedene völlig gleiche oder unterschiedliche Außenfläche $S_2$ beziehungsweise $S'_2$ und die von Null verschiedene völlig gleiche oder unterschiedliche Dicke $e_2$ beziehungsweise $e'_2$ aufweisen; und

c) zwei poröse Stromsammler (CC) und (CC') mit völlig gleicher oder unterschiedlicher chemischer Zusammensetzung, die auf die Flächen $S_2$ und $S'_2$ von (EP) und (EP') aufgebracht sind, wobei die Stromsammler (CC) und (CC') die von Null verschiedene völlig gleiche oder unterschiedliche Außenfläche $S_3$ beziehungsweise $S_3'$ und die von Null verschiedene völlig gleiche oder unterschiedliche Dicke $e_3$ beziehungsweise $e'_3$ aufweisen,

d) mindestens einen porösen Überzug (ER), der aus einem Material oder einer Materialmischung besteht, das oder die chemisch kompatibel mit den Materialien oder Materialmischungen der Elektroden, der Stromsammler und des Festelektrolyten mit einem kontrollierten kontinuierlichen Gradienten der Oberflächenporosität ist, dessen Sintertemperatur den Sintertemperaturen der Materialien oder Materialmischungen sehr ähnelt, aus denen die Elektroden, Stromsammler und der Festelektrolyt besteht beziehungsweise bestehen, wobei der Überzug (ER) <u>entweder</u> auf die Fläche $S_3$ von (CC) <u>oder</u> auf die Fläche $S'_3$ von (CC') aufgebracht ist, wobei der Überzug eine Fläche $S_4$ und eine von Null verschiedene Dicke $e_4$ aufweist,

und **dadurch gekennzeichnet, dass** die Dicke E des Volumens der Membran gleich der Summe der Dicken jedes der genannten Elemente ist.

**25.** Keramische Membran nach Anspruch 1 bis 22, wobei die Schichten (CA) und (CA') dieselbe chemische Zusammensetzung wie die Elektroden (EP) und (EP') aufweisen.

**26.** Keramische Membran nach Anspruch 1 bis 22, wobei die Schichten (CA) und (CA') dieselbe oder eine andere chemische Zusammensetzung aufweisen und aus einem Gemisch aus Verbindungen der Formel (Ia) und der Formel (II) bestehen.

**27.** Keramische Membran nach einem der Ansprüche 1 bis 25, wobei die Stromsammler (CC) und (CC') im Wesentlichen entweder aus einem Metall oder aus einem Metalllack und insbesondere einem Goldlack oder einem Silberlack bestehen oder aus einem Gemisch aus einem Metall und einer "inerten Oxid"keramik, insbesondere einem Gemisch aus einem Metall und Aluminiumoxid, oder einem Gemisch aus einem Metall und einer "gemischt leitenden" Oxidkeramik und insbesondere einem Gemisch aus einem Metall und einem Perowskitmaterial, oder einem Gemisch aus einem Metall und einer "Ionen leitenden" Oxidkeramik und insbesondere einem Gemisch aus einem Metall und mit Yttrium (8 Mol%) stabilisiertem Zirkonoxid, oder einem Gemisch aus einem Metall und einer "Elektronen leitenden" Oxidkeramik und insbesondere einem Gemisch aus einem Metall und Nickeloxid, oder einem Gemisch aus einem Metall und einem Carbid und insbesondere einem Gemisch aus einem Metall und Siliciumcarbid, oder einem Gemisch aus einem Metall und einem Nitrid und insbesondere einem Gemisch aus einem Metall und Siliciumnitrid, oder einem Gemisch aus einem oder mehreren der zuvor definierten Gemische.

**28.** Keramische Membran nach Anspruch 27, wobei die Stromsammler (CC) und (CC') mit völlig gleicher oder verschiedener Zusammensetzung aus einem Gemisch aus einem Metall, das entweder aus den Übergangsmetallen, insbesondere aus Silber, Kupfer und Nickel, oder aus den Edelmetallen und insbesondere aus Gold, Platin und Palladium ausgewählt ist, und entweder einer oder mehrerer Verbindungen der Formel (I) wie zuvor definiert oder einer oder mehrerer Verbindungen der Formel (II) wie zuvor definiert bestehen.

**29.** Keramische Membran nach Anspruch 28, wobei die Stromsammler (CC) und (CC') mit völlig gleicher Zusammensetzung entweder aus einem Gemisch aus Silber und Yttriumoxid-dotiertem Zirkonoxid, vorzugsweise YSZ (8%), oder einem Gemisch aus Silber und einer oder mehreren Verbindungen der Formel (II) bestehen, vorzugsweise Strontium-dotiertes Lanthanmanganit (LSM) und insbesondere $La_{0,9}Sr_{0,1}MnO_{3-\delta}$, oder einem Gemisch aus Silber, einer "Ionen leitenden" Keramik und einer "gemischt leitenden" Keramik und vorzugsweise dem Gemisch Ag-YSZ (8%)-LSM.

**30.** Keramische Membran nach einem der Ansprüche 1 bis 29, wobei die Überzüge (ER) und gegebenenfalls (ER') isolierend sind.

**31.** Keramische Membran nach einem der Ansprüche 1 bis 29, wobei die Überzüge (ER) und gegebenenfalls (ER') aus Verbindungen oder Gemischen von Verbindungen der Formel (II) und insbesondere aus Verbindungen der Formel $La_uSr_vCo_dFe_cO_w$ bestehen, wobei u + v und c + d gleich 1 sind und w derart ist, dass die betreffende Struktur ungeladen ist.

**32.** Keramische Membran nach Anspruch 31, wobei die Überzüge (ER) und gegebenenfalls (ER') aus einer Verbindung der Formel (IIa) bestehen:

$$La_{0,8}Sr_{0,2}Co_{0,8}Fe_{0,2}O_w \qquad (IIa)$$

wobei w derart ist, dass die Struktur der Formel (IIa) ungeladen ist.

**33.** Keramische Membran nach einem der Ansprüche 1 bis 32, wobei jeder der Stromsammler (CC) und (CC') mit dem äußeren Abschnitt des Stromkreises über einen Elektronen leitenden Draht aus einem Metall verbunden ist, das völlig mit dem übereinstimmt oder sich von dem unterscheidet, aus dem die Stromsammler bestehen.

**34.** Keramische Membran nach einem der Ansprüche 16 bis 33, **dadurch gekennzeichnet, dass** sie mit Kügelchen aus Mullit, Zirkonoxid, Aluminiumoxid oder Perowskit gefüllt ist.

**35.** Verwendung einer keramischen Membran nach einem der Ansprüche 1 bis 34 zum Abtrennen von Sauerstoff aus der Luft oder einem Gasgemisch, das ihn enthält.

**36.** Verwendung einer keramischen Membran nach einem der Ansprüche 1 bis 34, um unter Druck höchstreinen Sauerstoff herzustellen.

**37.** Verwendung einer keramischen Membran nach einem der Ansprüche 1 bis 34 zum Analysieren des Vorhandenseins von Sauerstoff in einer Gasatmosphäre.

**38.** Verfahren zum Herstellen von höchstreinem Sauerstoff, das in der Trennung von Sauerstoff von Luft durch Ionenleitung durch eine elektrochemische Zelle nach einem der Ansprüche 1 bis 34 hindurch besteht.

**39.** Verfahren zum Entfernen von Sauerstoff aus einer Gasatmosphäre, in der Vorgänge erfolgen, für die eine Atmosphäre mit einem geringen Sauerstoffgehalt oder ohne Sauerstoff erforderlich ist, das in der Abtrennung von Sauerstoff aus dieser Atmosphäre durch Ionenleitung durch eine Membran nach einem der Ansprüche 14 oder 15 und 18 bis 33 hindurch besteht.

**40.** Verfahren zum Herstellen von Wärme- und elektrischer Energie im Inneren einer Festoxid-Brennstoffzelle durch Reaktion von Sauerstoff mit Wasserstoff, **dadurch gekennzeichnet, dass** der Sauerstoff gewonnen wird, indem er durch eine keramische Membran nach einem der Ansprüche 1 bis 34 hindurch von der Luft abgetrennt wird.

S
S'

Electrolyte solide
YSZ (8% mol.)

Couche conducteur
mixte (LSM)

Couche de collecteur
(Ag/LSM)

Fils d'argent (Ag)

Bagues (Ni/Cr)

Couche protectrice
(LSCoFe)

Zone Active

FIG 1A

CA   EP        CC         ER

CD

FIG. 1B

Unités tubulaires individuelles@750-780°C@10bars@10-15A
**Influence du collecteur de courant, de la couche protectrice, de la surface/rugosité**
**de la membrane YSZ**

*2.: Ag-LSM*
*10 A / 750 °C*

*1.: Ag*
*10 bar / 750 °C*

*3.: Ag-LSM + LSCoFe*
*10 A / 750 °C*

*4.: Surface/rugosité + Ag-LSM + LSCoFe*
*15 A / 780 °C*

Tension / V

Temps / heures

FIG.2

Vieillissement@780-800°C@10-17A@P(O2)=10bars
Influence de l'épaisseur des couches intermédiaires et des dépôts (électrode, collecteur de courant, couche protectrice) sur YSZ (surface/rugosité)

780 °C
15-10-15 A

800 °C
15-17 A

3)
1)
2)

1) LSM/Ag-LSM/LSCoFe (15-30/60-80/30-40 μm)

2) LSM/Ag-LSM/LSCoFe (15-30/120-130/60-80 μm)

3) LSM/(Ag-YSZ-LSM)/Ag-LSM/LSCoFe (15-30(10-20)/60-8030-40 μm)

Tension / V

Temps / heures

**FIG. 3**

Vieillissement @780-800°C@15-17A
Module de 10 unités / P(O2)=10 bar, Dt(O2)=0,6Nl/min

Tension / V

Intensité / A

780 °C

800 °C

Temps / heures

**FIG. 4A**

Evolution du rendement faradique@780-800°C@15-17A@10bars
Module de 10 unités / P(O2)=10 bar, Dt(O2)=0,6Nl/min

780 °C
15 A

800 °C
15-17 A

Rdt faradique: Débit expérimental/débit théorique

Rendement Faradique / %

Temps / heures

**FIG. 4B**